(19) Europäisches Patentamt
European Patent Office
Office européen des brevets

(11) **EP 1 051 823 B1**

(12) **EUROPEAN PATENT SPECIFICATION**

(45) Date of publication and mention
of the grant of the patent:
**18.04.2007 Bulletin 2007/16**

(51) Int Cl.:
**H04L 29/06** (2006.01)

(21) Application number: **99901359.2**

(22) Date of filing: **07.01.1999**

(86) International application number:
**PCT/US1999/000336**

(87) International publication number:
**WO 1999/035802 (15.07.1999 Gazette 1999/28)**

(54) **SYSTEM FOR DELIVERING DATA CONTENT OVER A LOW BIT RATE TRANSMISSION CHANNEL**

SYSTEM ZUR LIEFERUNG VON DATEN ÜBER EINEN ÜBERTRAGUNGSKANAL MIT NIEDRIGEN BITRATEN

SYSTEME PERMETTANT D'ENVOYER UN CONTENU DE DONNEES SUR UN CANAL DE TRANSMISSION A FAIBLE DEBIT BINAIRE

(84) Designated Contracting States:
**DE FR GB**

(30) Priority: **07.01.1998 US 70720 P**
**13.02.1998 US 75123 P**
**30.06.1998 US 107666**

(43) Date of publication of application:
**15.11.2000 Bulletin 2000/46**

(73) Proprietor: **MICROSOFT CORPORATION**
**Redmond, Washington 98052-6399 (US)**

(72) Inventors:
• **WECKER, Dave**
**Bothell, WA 98021 (US)**
• **DEO, Vinay**
**Bellevue, WA 98008 (US)**
• **MILLER, John, Mark**
**Kirkland, WA 98034 (US)**
• **TUNIMAN, David**
**Redmond, WA 98053 (US)**
• **O'LEARY, Michael, J.**
**Redmond, WA 98053 (US)**

(74) Representative: **McLeish, Nicholas Alistair**
**Maxwell et al**
**Boult Wade Tennant**
**Verulam Gardens**
**70 Gray's Inn Road**
**London WC1X 8BT (GB)**

(56) References cited:
• **KAASHOEK M F ET AL: "DYNAMIC DOCUMENTS: MOBILE WIRELESS ACCESS TO THE WWW" PROCEEDINGS, WORKSHOP ON MOBILE COMPUTING SYSTEMS AND APPLICATIONS,8 December 1994, pages 179-184, XP002016896**
• **VITALI F ET AL: "Extending HTML in a principled way with displets" COMPUTER NETWORKS AND ISDN SYSTEMS, vol. 29, no. 8-13, 1 September 1997, page 1115-1128 XP004095309**

**Description**

BACKGROUND OF THE INVENTION

The present invention relates to personal mobile computing devices commonly known as mobile devices. More particularly, the present invention relates to a system and method for delivering and receiving information on a mobile device.

Mobile devices are small electronic computing devices often referred to as personal digital assistants. Many such mobile devices are hand held devices, or palm-size devices, which comfortably fit within the hand. One commercially available mobile device is sold under the trade name HandHeld PC (or H/PC) having software provided by Microsoft Corporation of Redmond, Washington.

Generally, the mobile device includes a processor, random access memory (RAM), and an input device such as a keyboard and a display. The keyboard can be integrated with the display, such as where the keyboard is incorporated as a touch sensitive display. A communication interface is optionally provided and is commonly used to communicate with a desktop computer. A replaceable or rechargeable battery powers the mobile device. Optionally, the mobile device can receive power from an external power source that overrides or recharges the built-in battery.

In some prior applications, the mobile device is used in conjunction with a desktop computer. For example, the user of the mobile device may also have access to, and use, a desktop computer at work or at home, or both. The user typically runs the same types of applications on both the desktop computer and on the mobile device. Thus, it is quite advantageous for the mobile device to be designed to be coupled to the desktop computer to exchange information with, and share information with, the desktop computer.

Another technique for providing information to such mobile devices is through a wireless transmission link. Such information can include electronic mail or news, weather, sports, traffic and local event information. The information is typically obtained from a desktop computer connected to the Internet and delivered over a wired connection. However, it may be desirable to deliver such information over a wireless connection as well. A wireless receiver on the mobile device can act to receive information as it is being sent to the mobile device.

There is presently no reasonable way to deliver push style content (such as hypertext mark-up language (HTML) content provided on a global network such as the internet and world wide web) to such devices in a wireless manner and in an open and available architecture. The bit rate of conventional wireless channels is very low. Thus, the delivery of very large content (such as HDML content) is highly impractical.

One conventional type of approach to delivering such information is to rewrite the content into a device friendly format, such as HTML. The content is then obtained over a pull-style model. Another approach currently being used to deliver information via a wireless medium is a closed model. In a closed model, a content provider can only provide content which is written in a format suitable for receipt by a specific device implementing a specific type of software. This means that the vast majority of web content is unavailable for viewing on such devices.

KAASHOEK M F ET AL: "DYNAMIC DOCUMENTS: MOBILE WIRELESS ACCESS TO THE WWW" PROCEEDINGS, WORKSHOP ON MOBILE COMPUTING SYSTEMS AND APPLICATIONS, 8 December 1994 (1994-12-08), pages 179 - 184, discloses dynamic document programs for execution on a mobile device to generate a document.

SUMMARY OF THE INVENTION

There is provided a system for providing information content from a content provider to a mobile device as set out in Claim 1. There is also provided a computer readable medium including instructions readable by a mobile device as set out in Claim 17, a mobile device as set out in claim 29 and a method of rendering information on a mobile device as set out in claim 30.

The present invention provides a system by which information content is delivered to a mobile device. The web content is divided into data and script information. The script information is used to operate on the data to render the data in a predetermined format.

BRIEF DESCRIPTION OF THE DRAWINGS

FIG. 1 is a simplified block diagram illustrating one embodiment of a mobile device in a system in accordance with the present invention.
FIG. 2 is a more detailed block diagram of one embodiment of a mobile device shown in FIG. 1.
FIG. 3 is a simplified pictorial illustration of one embodiment of the mobile device shown in FIG. 2.

FIG. 4 is a simplified pictorial illustration of another embodiment of the mobile device shown in FIG. 2.

FIG. 5 is a block diagram of one embodiment of a desktop computer in accordance with one aspect of the present invention.

FIG. 6 is a flow diagram illustrating the operation of a mobile device in accordance with one aspect of the present invention.

FIG. 7 illustrates a general data structure of a packet transmitted to the mobile device in accordance with one aspect of the present invention.

FIG. 8 is a more detailed flow diagram illustrating a routing and translator layer and the preparation of packets for transmission in accordance with one aspect of the present invention.

DETAILED DESCRIPTION OF THE PREFERRED EMBODIMENTS

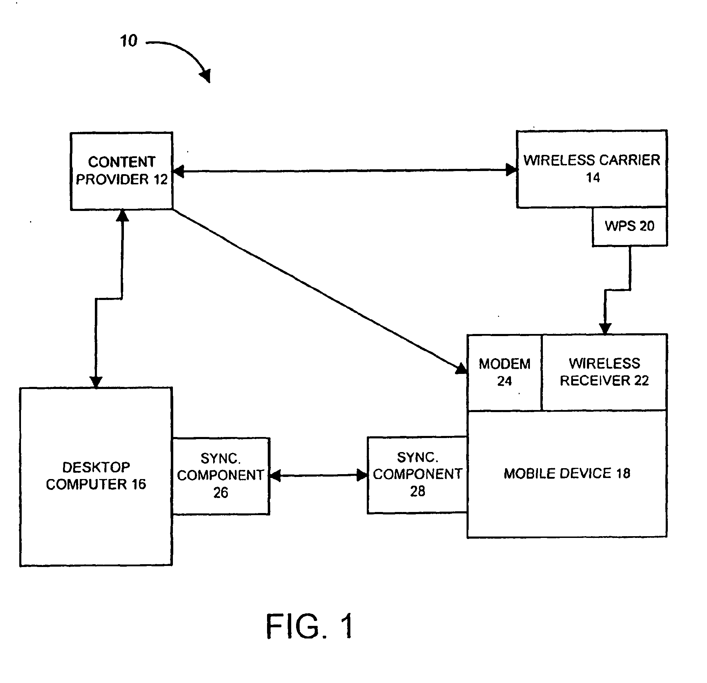

FIG. 1 illustrates a system 10 in which the present invention is illustratively implemented. System 10 includes content provider 12, wireless carrier 14, desktop computer 16 and mobile device 18. Content provider 12 provides any suitable type of data from a database or other data source. For example, content provider 12 is discussed hereinafter as a provider of internet world wide web content. In the preferred embodiment, the content is provided in a standard format, such as HTML, JPEG, GIF, WAV, etc. The web content is also preferably described in a channel definition format (CDF) file. A single portion of content (such as a web page or a web site) is referred to herein as a mobile channel.

A mobile channel is a self describing web site that contains all the information necessary for efficient download of web content to mobile device 18. Three components are provided in a preferable mobile channel. The components include a channel definition format (CDF) file, a set of script files to render the channel, and a set of data files to be rendered. The CDF files are described in greater detail in U.S. patent number 6,449,638, entitled CHANNEL DEFINITION ARCHITECTURE EXTENSION. Briefly, the CDF is an inventory of content contained on the mobile channel.

The script files contain script which defines templates which specify the appearance of the data on the screen of mobile device 18. Scripts are preferably written in visual basic script (VBS).

The data files correspond to one or more script files and include data which is indicative of the substantive content of the channel to be rendered. The data is packaged in small and simple text files. All of this information is used to define web content.

Wireless carrier 14 is described in greater detail later in the application. Briefly, however, wireless carrier 14 is configured to receive web content from the web content provider 12 via dial-up or direct internet connection, or a network connection. Wireless carrier 14 also includes a wireless push server 20. Server 20 splits the content received from content provider 12 into pieces which are compatible with the particular type of transport being used by wireless carrier 14. For instance, server 20 may split the data such that it conforms to maximum packet size constraints, character set requirements, etc. for the channel type or transport type being used. Prior to transmission, the data is preferably translated to a different form. As is described in greater detail later in the application, such translation may include compression, encryption, encoding and then packaging. Once the data has been split appropriately such that it conforms to the transport constraints, the data is then configured for transmission over the air through a wireless network (such as through a paging channel) to be received directly on mobile device 18. The transmitted data is received by a wireless receiver and driver component 22 on mobile device 18 where the data is prepared for use by mobile device 18.

Mobile device 18 also preferably includes a modem 24. Thus, rather than being transmitted through wireless carrier 14, the web content can be transmitted directly from web content provider 12 through a direct dial-up modem connection to mobile device 18.

Desktop computer 16 will also be described in greater detail later in the specification. Briefly, however, desktop computer 16 is preferably provided with a standard web browser, such as Internet Explorer 4.0 commercially available from the Microsoft Corporation of Redmond, Washington. That being the case, the users of desktop 16 can preferably subscribe to channels in a standard fashion which provide the user with certain channel content which can be browsed off-line or on-line. Desktop computer 16 is preferably provided with a loadable transport (in accordance with one aspect of the present invention) that accesses the script files and acts on the corresponding data file (in accordance with the script) to render the content where desktop computer 16 renders the data. Desktop computer 16, through the transport, can periodically retrieve or receive new and updated script, data and CDF files either for further transmission to mobile device 18 or simply for rendering the data. The script, data and CDF files can be transmitted either together or independently of one another. Since scripting files typically need updating much less frequently than the data files, this provides the user with the ability to view the web content on the desktop (off-line) while requiring only small amounts of bandwidth for incremental updating of the data files.

Desktop computer 16 also preferably includes synchronization component 26. Briefly, synchronization component 26 is configured to interact with a similar synchronization component 28 on mobile device 18 such that files which are the subject of synchronization can be synchronized from desktop computer 16 to mobile device 18, or vice versa. Once synchronized, both files (those on computer 16 and mobile device 18) contain up to date information.

More specifically, mobile device 18, in the preferred embodiment, can be synchronized with either desktop computer 16, or another mobile device 18, or both. In that instance, properties of objects stored in an object store on mobile device 18 are similar to properties of other instances of the same object stored in an object store on desktop computer 16 or another mobile device 18. Thus, for example, when a user changes one instance of an object stored in an object store on desktop computer 16, the second instance of that object in the object store of mobile device 18 is updated the next time mobile device 18 is connected to desktop computer 16 so that both instances of the same object contain up-to-date data. This is referred to as synchronization.

In order to accomplish synchronization, synchronization components 26 and 28 run on both mobile device 18 and desktop computer 16 (or another mobile device 18). The synchronization components communicate with one another through well defined interfaces to manage communication and synchronization.

Mobile device 18 is also preferably provided with a script interpreter which, in one preferred embodiment, is the same as or similar to the loadable transport on desktop computer 16. Such a transport may be, for example, a down-sized visual basic interpreter, which receives and interprets the formatting script. The script is associated with a certain data file (typically a text file) that holds the raw data for the web content. Thus, the script interpreter operates on the data associated with a given script to provide a rendering of the web content to the user of mobile device 18.

By separating the script from the data in the web content, web content can be transmitted to mobile device 18 over very low bit rate channels. The script will only typically need to be transmitted very infrequently. Also, since an individual file is typically much smaller than the script files, the data can be updated quite frequently, giving the user of mobile device 18 updated web content information, without transmitting new script. Thus, the separation of the script and data allows the transmission of web content information in a very efficient manner over low bit rate channels.

It is worth noting that, in the preferred embodiment, while mobile device 18 can be coupled to desktop computer 16, it can be also coupled to another mobile device 18. This connection can be made using any suitable, and commercially available, communication link and using a suitable communications protocol. For instance, in one preferred embodiment, mobile device 18 communicates with either desktop computer 16 or another mobile device 18 with a physical cable which communicates using a serial communications protocol. Other communication mechanisms are also contemplated by the present invention, such as infra-red (IR) communication or other suitable communication mechanisms.

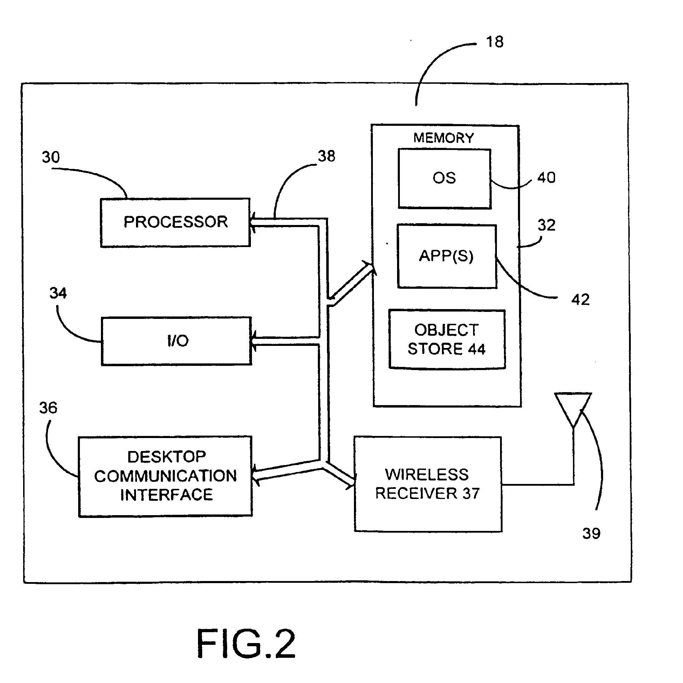

FIG. 2 is a more detailed block diagram of mobile device 18. Mobile device 18 preferably includes microprocessor 30, memory 32, input/output (I/O) components 34, desktop communication interface 36 wireless receiver 37 and antenna 39. In a preferred embodiment, these components of mobile 10 are coupled for communication with one another over a suitable bus 38.

Memory 32 is preferably implemented as non-volatile electronic memory such as random access memory (RAM) with a battery back-up module (not shown) such that information stored in memory 32 is not lost when the general power to mobile device 18 is shut down. A portion of memory 32 is preferably allocated as addressable memory for program execution, while another portion of memory 32 is preferably used for storage, such as to simulate storage on a disc drive.

Memory 32 includes operating system 40, an application program 42 (such as a personal information manager or PIM) as well as an object store 44. During operation, operating system 40 is preferably executed by processor 30 from memory 32. Operating system 40, in one preferred embodiment, is a Windows CE brand operating system commercially available from Microsoft Corporation. The operating system 40 is preferably designed for mobile devices, and implements database features which can be utilized by PIM 42 through a set of exposed application programming interfaces and methods. The objects in object store 44 are preferably maintained by PIM 42 and operating system 40, at least partially in response to calls to the exposed application programming interfaces and methods.

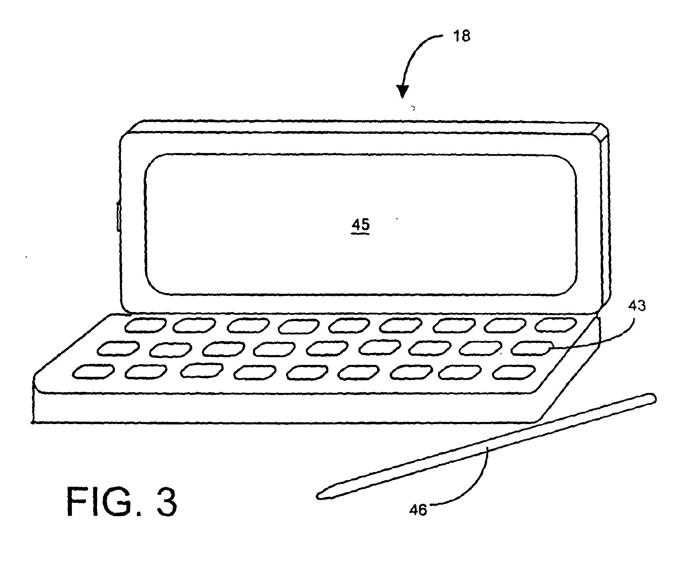

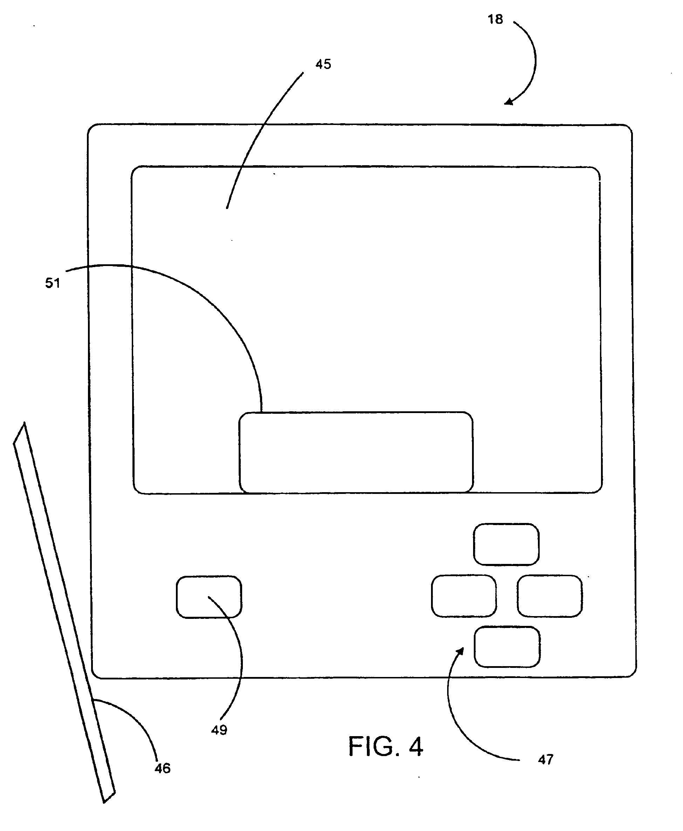

I/O components 34, in one preferred embodiment, are provided to facilitate input and output operations from a user of mobile device 18. I/O components 34 are described in greater detail with respect to FIGS. 3 and 4.

Desktop communication interface 36 is optionally provided as any suitable communication interface. Interface 36 is preferably used to communicate with desktop computer 16, content provider 12, wireless carrier 14 and optionally another mobile device 18, as described with respect to FIG. 1. Thus, communication interface 36 preferably includes synchronization components 28 for communicating with desktop computer 16 and modem 24 for communicating with content provider 12. Wireless receiver and driver 22 are used for communicating with wireless carrier 14.

FIG. 3 is a simplified pictorial illustration of one preferred embodiment of a mobile device 10 which can be used in accordance with the present invention. Mobile device 10, as illustrated in FIG. 3, can be a desktop assistant sold under the designation H/PC having software provided by the Microsoft Corporation. In one preferred embodiment, mobile device 18 includes a miniaturized keyboard 43, display 45 and stylus 46. In the embodiment shown in FIG. 3, display 45 is a liquid crystal display (LCD) which uses a contact sensitive display screen in conjunction with stylus 46. Stylus 46 is used to press or contact the display 45 at designated coordinates to accomplish certain user input functions. Miniaturized keyboard 43 is preferably implemented as a miniaturized alpha-numeric keyboard, with any suitable and desired function keys which are also provided for accomplishing certain user input functions.

FIG. 4 is another simplified pictorial illustration of the mobile device 18 in accordance with another preferred embodiment of the present invention. Mobile device 18, as illustrated in FIG. 4, includes some items which are similar to those described with respect to FIG. 3, and are similarly numbered. For instance, mobile device 18, as shown in FIG. 4, also includes touch sensitive screen 45 which can be used, in conjunction with stylus 46, to accomplish certain user input functions. It should be noted that the display 45 for the mobile device as shown in FIGS. 3 and 4 can be the same size as one another, or different sizes from one another, but would typically be much smaller than a conventional display used with a desktop computer. For example, displays 45 shown in FIGS. 3 and 4 may be defined by a matrix of only 240X320 coordinates, or 160X160 coordinates, or any other suitable size.

The mobile device 18 shown in FIG. 4 also includes a number of user input keys or buttons (such as scroll buttons 47) which allow the user to scroll through menu options or other display options which are displayed on display 45, or which allow the user to change applications, without contacting display 45. In addition, the mobile device 18 also shown in FIG. 4 also preferably includes a power button 49 which can be used to turn on and off the general power to the mobile device 18.

It should also be noted that, in the embodiment illustrated in FIG. 4, mobile device 18 includes a hand writing area 51. Hand writing area 51 can be used in conjunction with stylus 46 such that the user can write messages which are stored in memory 42 for later use by the mobile device 18. In one illustrative embodiment, the hand written messages are simply stored in hand written form and can be recalled by the user and displayed on the display screen 45 such that the user can review the hand written messages entered into the mobile device 18. In another preferred embodiment, mobile device 18 is provided with a character recognition module such that the user can enter alpha-numeric information into mobile device 18 by writing that alpha-numeric information on area 51 with stylus 46. In that instance, character recognition module in the mobile device 18 recognizes the alpha-numeric characters and converts the characters into computer recognizable alpha-numeric characters which can be used by the application programs 42 in mobile device 18.

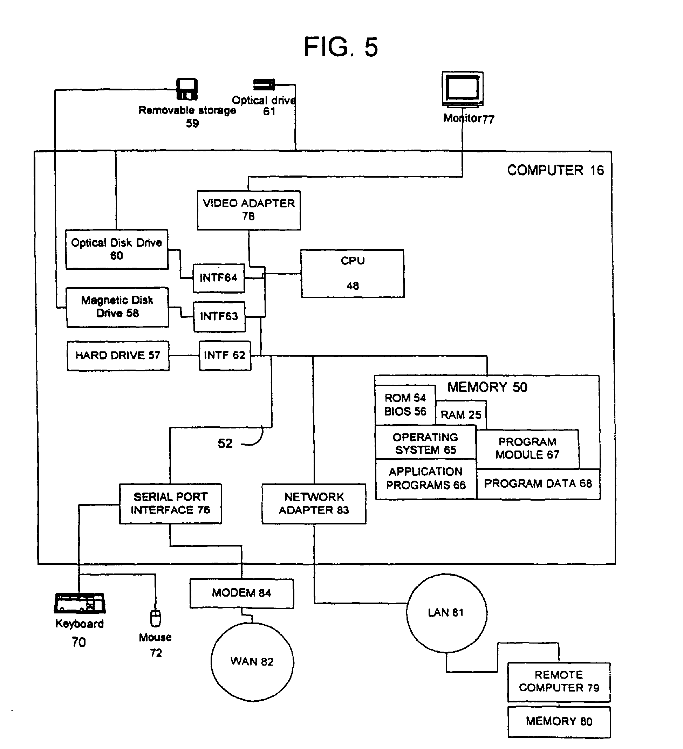

FIG. 5 and the related discussion are intended to provide a brief, general description of a suitable desktop computer 16 in which portions of the invention may be implemented. Although not required, the invention will be described, at least in part, in the general context of computer-executable instructions, such as program modules, being executed by a personal computer 16 or mobile device 18. Generally, program modules include routine programs, objects, components, data structures, etc. that perform particular tasks or implement particular abstract data types. Moreover, those skilled in the art will appreciate that desktop computer 16 may be implemented with other computer system configurations, including multiprocessor systems, microprocessor-based or programmable consumer electronics, network PCs, minicomputers, mainframe computers, and the like. The invention may also be practiced in distributed computing environments where tasks are performed by remote processing devices that are linked through a communications network. In a distributed computing environment, program modules may be located in both local and remote memory storage devices.

With reference to FIG. 5, an exemplary system for implementing desktop computer 16 includes a general purpose computing device in the form of a conventional personal computer 16, including processing unit 48, a system memory 50, and a system bus 52 that couples various system components including the system memory 50 to the processing unit 48. The system bus 52 may be any of several types of bus structures including a memory bus or memory controller, a peripheral bus, and a local bus using any of a variety of bus architectures. The system memory 50 includes read only memory (ROM) 54 a random access memory (RAM) 55. A basic input/output system (BIOS) 56, containing the basic routine that helps to transfer information between elements within the desktop computer 16, such as during start-up, is stored in ROM 54. The desktop computer 16 further includes a hard disk drive 57 for reading from and writing to a hard disk (not shown) a magnetic disk drive 58 for reading from or writing to removable magnetic disk 59, and an optical disk drive 60 for reading from or writing to a removable optical disk 61 such as a CD ROM or other optical media. The hard disk drive 57, magnetic disk drive 58, and optical disk drive 60 are connected to the system bus 52 by a hard disk drive interface 62, magnetic disk drive interface 63, and an optical drive interface 64, respectively. The drives and the associated computer-readable media provide nonvolatile storage of computer readable instructions, data structures, program modules and other data for the desktop computer 16.

Although the exemplary environment described herein employs a hard disk, a removable magnetic disk 59 and a removable optical disk 61, it should be appreciated by those skilled in the art that other types of computer readable media which can store data that is accessible by a computer, such as magnetic cassettes, flash memory cards, digital video disks (DVDs), Bernoulli cartridges, random access memories (RAMs), read only memory (ROM), and the like, may also be used in the exemplary operating environment.

A number of program modules may be stored on the hard disk, magnetic disk 59, optical disk 61, ROM 54 or RAM 55, including an operating system 65, one or more application programs 66 (which may include PIMs), other program modules 67 (which may include synchronization component 26), and program data 68. A user may enter commands and information into the desktop computer 16 through input devices such as a keyboard 70, pointing device 72 and microphone 74. Other input devices (not shown) may include a joystick, game pad, satellite dish, scanner, or the like. These and other input devices are often connected to the processing unit 48 through a serial port interface 76 that is coupled to the system bus 52, but may be connected by other interfaces, such as a sound card, a parallel port, game port or a universal serial bus (USB). A monitor 77 or other type of display device is also connected to the system bus 52 via an interface, such as a video adapter 78. In addition to the monitor 77, desktop computers may typically include other peripheral output devices such as speaker 75 and printers.

The desktop computer 16 may operate in a networked environment using logic connections to one or more remote computers (other than mobile device 18), such as a remote computer 79. The remote computer 79 may be another personal computer, a server, a router, a network PC, a peer device or other network node, and typically includes many or all of the elements described above relative to desktop computer 16, although only a memory storage device 80 has been illustrated in FIG. 4. The logic connections depicted in FIG. 4 include a local area network (LAN) 81 and a wide area network (WAN) 82. Such networking environments are commonplace in offices, enterprise-wide computer network intranets and the Internet.

When used in a LAN networking environment, the desktop computer 16 is connected to the local area network 81 through a network interface or adapter 83. When used in a WAN networking environment, the desktop computer 16 typically includes a modem 84 or other means for establishing communications over the wide area network 82, such as the Internet. The modem 84, which may be internal or external, is connected to the system bus 52 via the serial port interface 76. In a network environment, program modules depicted relative to desktop computer 16, or portions thereof, may be stored in the remote memory storage devices. It will be appreciated that the network connections shown are exemplary and other means of establishing a communications link between the computers may be used.

Desktop computer 16 runs operating system 65 that is typically stored in non-volatile memory 54 and executes on the processor 48. One suitable operating system is a Windows brand operating system sold by Microsoft Corporation, such as Windows 95 or Windows NT, operating systems, other derivative versions of Windows brand operating systems, or another suitable operating system. Other suitable operating systems include systems such as the Macintosh OS sold from Apple Corporation, and the OS/2 Presentation Manager sold by International Business Machines (IBM) of Armonk, New York. Application programs are preferably stored in program module 67, in volatile memory or non-volatile memory, or can be loaded into any of the components shown in FIG. 5 from a floppy diskette 59, CDROM drive 61, downloaded from a network via network adapter 83, or loaded using another suitable mechanism.

A dynamically linked library (DLL), comprising a plurality of executable functions is associated with PIMs in the memory for execution by processor 48. Interprocessor and intercomponent calls are facilitated using the component object model (COM) as is common in programs written for Microsoft Windows brand operating systems. Briefly, when using COM, a software component such as a DLL has a number of interfaces. Each interface exposes a plurality of methods, which can be called individually to utilize different services offered by the software component. In addition, interfaces are provided such that methods or functions can be called from other software components which optionally receive and return one or more parameter arguments.

In general, the DLL associated with the particular PIM is designed specifically to work in conjunction with that PIM and to expose desktop synchronization interfaces that function as described in more detail above according to a synchronization protocol. The DLL, in turn, calls interfaces exposed by the PIM in order to access data representing individual properties of objects maintained in an object store. The object store 6, of course, can reside in any one of the suitable memory components described with respect to FIG. 4.

ARCHITECTURE BLOCK DIAGRAM

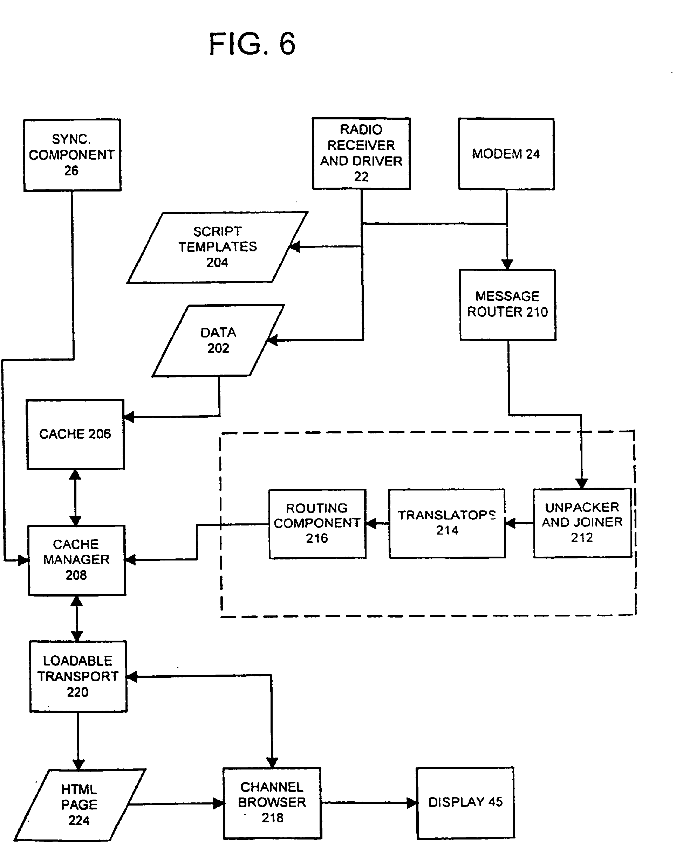

FIG. 6 is a block diagram illustrating the functional architecture of mobile device 18. FIG. 6 shows similar items to those previously shown in the specification. Similar items are similarly numbered. FIG. 6 illustrates that mobile device 18 receives web content information either via synchronization component 26, wireless receiver (radio receiver and driver) 22 or modem 24. In any of those cases, the CDF files as well as the script templates and data files, indicated by blocks 202 and 204 are eventually provided to cache memory 206. Where the web content information is received through synchronization component 26, the script templates and data files may are not be encrypted or encoded or otherwise formatted in the same fashion as they are for transmission over a wireless or modem channel. Therefore, the script templates 204 and data files 202 are provided directly to cache manager 208. Cache manager 208 receives the script templates and data files and provides them to cache memory 206. Cache manager 208 includes memory manipulation and timing components as well as data transfer components, which are suitable for transferring the script templates and data files to a particular location in cache memory 206, and to track that location.

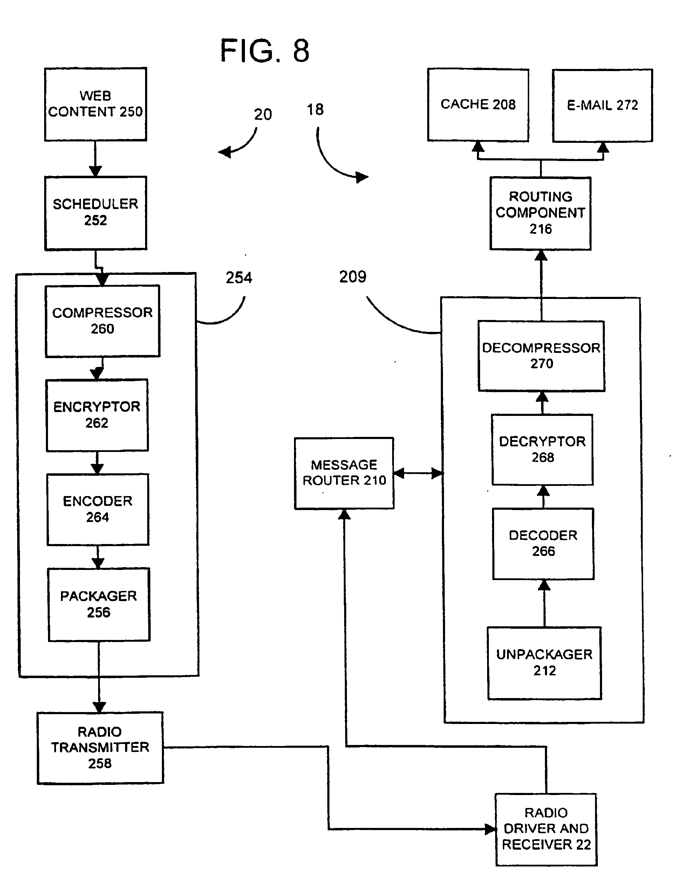

If, on the other hand, the web content is received over wireless receiver and driver 22 or modem 24, additional processing steps must be undertaken prior to caching the data. Wireless receiver and driver 22 is a physical layer that receives and filters messages and generates wake-up events to mobile device 18. In one preferred embodiment, as is described later with respect to FIG. 8, the information transmitted is first translated (such as compressed, encrypted, encoded and packaged) before transmission. Thus, the data must be translated back to its original form prior to further use by mobile device 18. Therefore, the data is first provided to message router 210. Message router 210 acts to record the message and route the received message to a translation layer 209. In FIG. 6, translation layer 209 includes unpackager and joiner component 212, a group of additional translators collectively labeled 214 and a further routing component 216.

Unpackager and joiner block 212 acts to receive, unpack and order a group of packets being transmitted. The unpackager rejoins packets of any long messages which were split up by wireless carrier 15. The ordered data is provided to translation components 214.

Translation components 214 act to reformat or translate the data into appropriate form to be handled by content handler 216. For example, once the packets which comprise a message have been unpacked and rejoined by unpacker and joiner 212, translation components 214 may typically decompress, decrypt and decode those packets.

Content handler 216 delivers the unpacked, joined and translated message to the appropriate registered destination (i.e., to the appropriate application or other functional block) on mobile device 18. In the embodiment illustrated in FIG. 5, content handler 216 provides the information to cache manager 208 which stores it in cache 206.

When the user wishes to off-line browse the web content stored in cache 206, the user launches an appropriate application program indicated by channel browser block 218 in FIG. 5. Channel browser 218 preferably generates suitable user interfaces on display 45 which provide the user with the ability to choose a certain channel to be viewed.

Channel browser 218 is configured to interact with a loadable transport 220 which is, in turn, coupled to cache manager 208. In response to the user requesting to view information provided via the chosen channel, loadable transport 220 requests cache manager 208 to retrieve the corresponding web content information (in the form of script templates and data files) from cache 206. The desired script templates 204 and data files 202 are provided from cache manager 208 to loadable transport 220.

The script interpreter in transport 220 is preferably a visual basic script interpreter which interprets script templates 204 and acts on data files 202 to provide a desired rendering of the web content. In the embodiment illustrated in FIG. 5, the web content is rendered as a conventional hypertext mark-up language (HTML) page 224. Loadable transport 220 then provides the HTML page rendering to channel browser 218 for viewing by the user of mobile device 18 on display 45.

INFORMATION LOGGING

One aspect of the present invention enables logging of desired information for use by content provider 12. In other words, by providing an entry in the CDF file, the content providers can tag certain items which they want to track (i.e., they can tag certain items for which they would like to know when, and for how long, those items were viewed by any given user). The present invention implements this functionality.

For example, when the user launches channel browser 218, and requests information from loadable transport 220, loadable transport 220 determines whether the requested information includes the appropriate CDF tag indicating that the content provider wishes to log information regarding the time and duration which the information was viewed. If so, loadable transport 220 logs information which is representative of the time and duration that the information was viewed by the user. This information is stored in cache 206 in a location which corresponds to that particular web content information.

The next time mobile device 18 is synchronized with desktop computer 16, not only is mobile device 18 updated with the current web content received by desktop computer 16, but desktop computer 16 is updated with the current logging information maintained by mobile device 18. Similarly, the next time the browser on desktop computer 16 accesses the appropriate web content from content provider 12, the logging information is transmitted from desktop computer 16 to content provider 12. In one preferred embodiment, since the browser on desktop computer 16 is Internet Explorer 4.0, logging information which has been synchronized to desktop computer 16 is transmitted to content provider 12 when the scheduler of Internet Explorer 4.0 is next invoked on desktop computer 16.

DATA STRUCTURE AND FILTERING

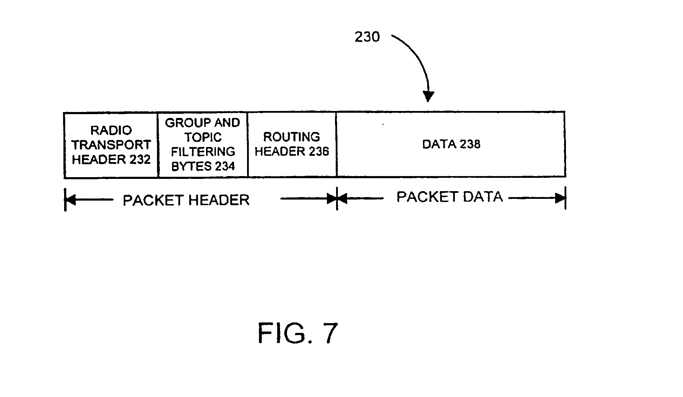

FIG. 7 illustrates one embodiment of a packet of web content data received by radio receiver and driver 10. The radio receiver can preferably receive messages of substantially any format. Many different types of header formats can be defined for receipt by the radio. FIG. 7 gives but one illustrative type of packet format.

Packet 230 preferably includes a plurality of portions, such as radio transport header 232, group and topic filtering bytes 234, routing header 236 and data 238. The radio transport header 232 preferably includes address information. The address information is an identifier used to send a radio message to radio receiver 22 (or any other similar type of radio card). For example, in one common commercially available paging transmission protocol, the address information in radio transport header 232 comprises a capcode. The capcode refers to a storage location on the physical hardware radio card device 22 that stores addressing information. The radio transport header 232, in one preferred embodiment, supports sixteen different addresses. Radio receiver and driver 22 filters and discards any messages which do not match any of the addresses. If a match is observed, then radio receiver 22 has detected a message potentially addressed to it, and must receive and further process the message. The message is then passed to message router 210 which determines, in conjunction with translation layer 209, which components on the mobile device 18 are necessary to process the message.

Group and topic filtering bytes 234 are also preferably provided. A group, as referred to herein, is a subclass of an address that is used in accordance with the present invention to extend the filtering capability of an address. Further, a topic is a subclass of a group, which is also provided to extend the filtering capability of the address and group information.

It should be noted that messages arriving at radio receiver and driver 22 with an appropriate address may not have group and topic filtering bytes 234 pre-appended thereto. If those bytes are present, however, the driver in radio receiver and driver 22 operates to filter the message based on the group and topic filtering bytes.

The driver in radio receiver and driver 22 implements logic which first examines packet 230 to determine whether any group and topic filtering bytes 234 are included in packet 230. In a preferred embodiment, the driver in radio receiver and driver 22 supports a library which includes a function AnalyzeMessage(). The AnalyzeMessage function isolates service group codes and other information in the incoming message. If group and topic filtering bytes are present, then the group and topic filtering functions must be performed.

In the preferred embodiment, mobile device 18 includes a memory which contains a group table as described in greater detail in the above applications. Briefly, the group table contains entries of service groups, each of which can be associated with any suitable address. Also, there can preferably be any suitable number of service groups associated with one address. Thus, in the preferred embodiment, group entries in the group table are sorted by address numbers, then by service group codes. The content of one preferred embodiment of the group table is set out in more detail in the above-referenced application.

If group or topic filtering bytes are detected, then the driver in radio receiver and driver 22 searches the group table to determine whether the service group code detected in packet 230 is listed in the group table, and whether it is active or inactive. If the service group code is not found in the table, or if it is found but it has been deactivated (or disabled) then the driver 22 discards the message and no further processing is done with respect to that message. However, if driver 22 determines that the group and topic filtering bytes 234 are included in the group table, then it is determined that the message was intended for that particular mobile device 18 and further processing continues.

Since all of this group and topic filtering is done at the level of driver 22, it occurs quite low in the protocol stack, or system architecture, of mobile device 18. Thus, filtering occurs early on in the process and the storage space required for the address and message is quite low. In addition, since the driver, itself, performs much of this filtering, the group and topic filtering bytes 234 allow any application running on mobile device 18 to pass correct filtering information down to the group and topic tables for filtering at the level of driver 22. This significantly improves power consumption over previous designs because the messages do not need to be received, processed, and passed all the way up to the application level in the protocol stack, or architecture, of mobile device 18 before being filtered.

## TRANSMISSION AND TRANSLATION ARCHITECTURE

FIG. 8 is a more detailed block diagram illustrating the transmission of data packets from wireless push server (WPS) component 20 to mobile device 18. Wireless push server 20 preferably includes web content cache 250, scheduler 252, translation layer 254, packager 256 and radio transmitter 258. Translation layer 254 preferably includes any suitable and desired number of translators. The translators are preferably used to operate on the web content (e.g., the data files, script files and CDF files) and provide the content, in a desired form, to packager 256 of radio transmitter 258 for transmission to mobile device 18. In the embodiment shown in FIG. 8, translation layer 254 includes compressor 260, encrypter 262 and encoder 264.

FIG. 8 also shows a portion of mobile device 18 in greater detail. Similar items are similarly numbered to those shown in FIG. 6. However, FIG. 8 illustrates translator layer 209 in greater detail. Translator layer 209 preferably includes a desired number and type of translators which operate to reverse the translations performed in translator layer 254 on WPS 20. Thus, the embodiment shown in FIG. 8 includes unpackager 212, decoder 266, encrypter 268, and decompressor 270.

In operation, scheduler 252 periodically accesses web content cache 250 to provide updates, or additional web content, to mobile device 18. That information is first provided to translation layer 254. Each translator in translation layer 254 preferably performs the translation operation on the incoming data, and attaches an identifier, such as a header or a tag, to the data output thereby to indicate the type of translation performed. For instance, in the preferred embodiment, a portion of the web content which has been extracted from web content cache 250 by scheduler 252 (and prepared for translation layer 254 by scheduler 252) is first provided to compressor 260. Compressor 260 compresses the blob of information received thereby and attaches a four-byte header to identify the compression scheme used to compress the data. Compression is preferably done before encryption because pure text typically provides better compression than encrypted text.

Encrypter 262 receives the compressed data from compressor 260 and encrypts the output of compressor 260 and also attaches a four byte header to identify the encryption scheme used to encrypt the data. Encrypter 262 then provides encrypted data to encoder 264.

Encoder 264 encodes the output of encrypter 262 to convert the data stream into a stream consisting of characters suitable for transmission over the chosen wireless medium. For example, where the wireless medium is a conventional paging channel, encoder 264 encodes the data into a stream consisting of printable ASCII characters only, so that it may be transmitted over the wireless link. Encoder 264 also attaches a four byte header to the data to identify the particular encoding scheme used to encode the data.

As described in greater detail above, packager 256 splits the output of encoder 264 into smaller packages suitable for transmission over the wireless link. Packager 256 attaches a header in front of the data packet so that the packets can be identified uniquely by the receiver of the information. For example, if the data input to translation layer 254 is first compressed, then encrypted, then encoded, the output of encoder 264 can be represented by:

(Encodingscheme, [EncryptionID {CompressionID, Data}]) .

Thus, the packager takes the above data and produces packets generally in the form shown in FIG. 7 and given by:

{Hdr, data}, {Hdr, data}... [Hdr, data}

Packager 256 (which can also be viewed as a translator) provides the data and headers to radio transmitter 258 which transmits the data to radio receiver and driver 22. More specifically, the packager 256 breaks input data from content provider 12 into a number of packets somewhere between approximately 128 and 500 bytes in size depending on the particular carrier. Each packet is sent to a paging gateway (e.g, radio transmitter 258), such as by the internet, e-mail, wireless carrier or via modem. Packets can be sent down the pager channel in any order.

In one preferred embodiment, each record or packet contains 11-23 bytes of packet header information and N-bytes of packet data information generally of the form of packet 230 illustrated in FIG. 7. The radio transport header in the packet header information preferably includes an IP address, a sequence number, a packet number and a number of optional headers (e.g., group and topic filtering bytes 234 and routing header 236).

The IP address is the address of the service provider. The sequence number provides a particular sequence number for a packet stream being transmitted. The IP address and the sequence number (in combination) provide a unique identification to the packet stream and allow a receiver, such as mobile device 18, to assemble multiple packet streams arriving in a multiplex manner.

Radio receiver and driver 22 filters the data, as discussed above, and provides data to be received to router 210. Router 210 examines the header information on each packet. The header information gives router 210 an indication as to which translator needs to be invoked to operate on the data. In the embodiment shown in FIG. 8, the translators 212, 266, 268 and 270 are simply provided in reverse order as translators 256, 260, 262 and 264. The router maintains a table of all available translators in reference to the dynamically linked libraries (DLLs) of those translators. The four byte header or tag is used to locate the appropriate translator. The translator is responsible for removing this tag and dispatching or returning the translated data.

Most of the translators are part of a chain of translators in which the output of the translator can be fed to another translator. This provides flexibility to the content provider since they can alter the sequence of translators to their needs and particular data. However, translators can also be provided which consume the input in the sense that they place the outputs somewhere else in the system and thereby stop the translation chain.

The router continues to apply translators until the article is consumed by one of the terminating translators. In one preferred emboidment, when no remaining tags or headers are found and the article is still not consumed, then the data is passed onto the e-mail inbox 272.

Thus, router 210 obtains a first data packet, provides it to unpackager 212, and receives the unpackaged and joined data back from unpackager 212.Unpacker and joiner 212 stores all received packets and joins them together. It can receive packets out of sequence, receive multiple streams (from different content providers or the same content provider). In sum, the unpackager 212 implements a simple file system where a file comprises the complete data which was sent, before packetization.

The file name is formed of the IP address which is that of the service provider, along with the sequence number which, in addition to indicating a packet stream sequence member, indicates whether this particular packet is the last packet in a sequence being transmitted. The packets are received and stored in an ordered, linked list by unpackager and joiner 212.

Radio receiver and driver 22 receives and buffers a complete page of information. It then passes this page to message router 210 which writes the page to a file. Router 210 then calls unpackager and joiner 212. The packet is appended to a file whose name is derived from the IP address and sequence number combination contained in the given packet. If the file does not yet exist, then it is created new by unpackager 212.

When the packet marked as last packet is received, then unpackager 212 knows how many packets to expect. Recall that the last packet need not arrive temporally last. Unpackager 212 counts the number of packets already received and stores the number of packets it expects in a counter. Each time a non-duplicate packet is appended, the counter is decremented. When it falls to zero, all packets have been received. The unpackager 212 then marches through the index file which it has created, and which contains a time stamp indicative of the order of the packets received. The unpackager creates a data file in correct sequence and passes the data file on for further processing.

As soon as all packets have arrived, the data file containing the ordered linked list is removed from the file system in unpackager 212 and is passed either on to additional translators in translation layer 209 or back to router 210.

In order to deal with lost, duplicate, and erroneous packets, a checksum error detection method using cyclic redundancy code-32 (CRC-32) method is implemented over the entire file of data bytes (i.e., it excludes all header bytes).

In order to detect lost packets, the time stamp of the last packet received in the index file is recorded. Unpackager 212 checks this time stamp each time it processes a packet for the present data file, or for any other data file. If the time difference between a current time and the time of the last packet received is over a desired number of minutes (or any other suitable time interval), it is assumed that any remaining packets for the data file have been lost and the data file is deleted.

Duplicate packets are detected by referencing the index file which will already have an initialized entry for that packet. Two options can be implemented in dealing with duplicate packets. First, the new packet can be discarded and the old one retained. Second, the new packet can be appended to the data file by overwriting the index entry for the first (or old) packet. This will have the effect of discarding the old packet.

In any case, to conclude the example provided in FIG. 8, once the packets have been unpacked and joined, router 210 examines the headers on the data to find that the data must first be provided to decoder 266. Decoder 266 decodes the data and provides it back to router 210. The next header on the data is examined by router 210 and indicates that the data needs to be provided to decrypter 268. Decrypter 268 decrypts the data and then returns it to router 210. Router 210 then provides the data to decompressor 270, based on the header information remaining with the decrypted data. Decompressor 270 decompresses the data and either returns it to router 210 or provides it to router component 216 which identifies the particular destination for the data. In the preferred embodiment, routing component 216 is coupled to web content cache 208 and e-mail inbox 272. Of course, other destinations can also be provided.

One specific implementation of a translator, along with a more detailed description of illustrative compression, encryption and encoding translators is provided in the above-referenced co-pending U.S. patent applications, as well as Appendix A.

Thus, by separating the content into separate script template and data files, the present invention provides the ability to deliver content to a mobile device over a low bit rate channel in an economic and efficient manner. Small segments of data can be delivered instead of full HTML pages. The present invention also provides a mechanism by which logging and filtering can be accomplished in an efficient manner.

Although the present invention has been described with reference to preferred embodiments, workers skilled in the art will recognise that changes may be made in form and detail without departing from the scope of the invention.

**Appendix**

**Mobile Channels Scripting**

**Environment**

The Mobile Channels scripting model is based on Active Server Pages (ASP), as defined in IIS. ASP code is written in VBS. In Mobile Channels, both ASP and VBS are scaled down to fit the constraints of Windows CE devices. The streamlined ASP is also known as pocket ASP (pASP). Together, pASP and VBS are referred to as the Mobile Channels scripting environment. The discussions presented here focus on the differences between pASP/VBS for Mobile Channels and ASPNBS for Active Channels.

**Types**

There are three legal data types for Mobile Channels scripting: STRING, NUMERIC, and BOOLEAN. However, only STRING is supported internally. The other two are derived from STRING. String literals may be specified using the double quote character (") to bracket the expression. Numeric strings may be specified without quotes. Numbers can be of integers only and their values range between -32,768 and 32767. Boolean expressions evaluate to I for true and 0 for false. They may not be assigned to TRUE or FALSE as in Visual Basic. For example,

| Data Type | Value | Description |
|---|---|---|
| STRING | *"Example string literal"* | |
| NUMERIC | Result=3+4 | The result evaluates to 7. But *Result* is stored as a string value. |
| BOOLEAN | (a) 3 = 3, (b) 3 = 5 | (a) evaluates to I and (b) to 0. |

**Data Structures**

Mobile Channels supports the following data structures.

| Data Structure | Description |
|---|---|
| Variable | Elemental data structure of the simple data types presented above. Variable names are alphanumeric and must start with an alpha character. The underscore character can be used except for the leading character. Variable names should be short to conserve memory and can not be longer than 255 characters in any case. |
| Array | An ordered collections with numeric keys. The index counts from zero (0). For example, Result = a(0)+a(1). The method, Array.Count returns the total number of elements in the array. |

**Keywords**

The following keywords are reserved and may not be used as variable names:

**If, Then, Else, ElseIf, End If**
**For, Next, Do While, Loop, Exit For, Exit While**
**Set, Response, Request, MobileChannels**
**Now, LocDate, Len, Mid, Split, Asc, Chr, StrComp, Random**

**Comments**

Comments are started with the single quote (') and may appear anywhere on a line. **REM** of VBS is not supported for Mobile Channels scripting. The following is an example of a comment.
' this is an example comment.

**Operators and Precedence**

| Operator | Type | Precedence | Description |
|---|---|---|---|
| * | Numeric | 1 | Multiplication |
| / | Numeric | 1 | Division |
| Mod | Numeric | I | Modulo division |
| + | Numeric | 2 | Addition |
| - | Numeric | 2 | Subtraction |
| & | String | 2 | Concatenation |
| < | Boolean | 3 | Less than |
| <= | Boolean | 3 | Less than or equal to |
| > | Boolean | 3 | Greater than |
| >= | Boolean | 3 | Greater than or equal to |
| = | Boolean | 3 | Equal to |
| <> | Boolean | 6 | Not equal to |
| And | Boolean | 4 | Logical AND |
| Or | Boolean | 4 | Logical OR |
| Not | Boolean | 5 | Logical NOT |

Expressions are evaluated according to operator precedence. Operators of higher precedence (1 being the highest) get evaluated first. Operators of the same level are evaluated from left to right. Precedence may be overridden using parenthesis which can be nested. The inner most parenthesis is evaluated first.

Unlike in VBS, all expressions within a statement are always evaluated. In the following example, if *arr.count* is not greater than zero, *arr(1)* and *arr(2)* will be evaluated and the references to *arr(j)* will result in error.

```
If arr.count >0 and arr(1) = "foo" then
   arr(2) = "bar"
End If
```

If the first logical expression is false, the ensuing expressions are invalid. The correct implementation should be as follows.

```
If arr.count > 0 then
   If arr(1) = "foo" then
      arr(2) = "bar"
   End If
End If
```

**Escaping Special Characters**

Special characters such as the double quote may be "escaped" within a string literal by preceding it with the back slash character (\). The back slash character can be included in a string by escaping it as well. For example,
"This is a string that contains \" double quoates\"."
"This is a string that contains back slashes as in a file path:
\\c:\\windows."

**Statements**

In the Mobile Channels scripting environment, there are five classes of statements:

Assignment
The assignment statement is of the following form:
<variable> =<expression>

Conditional

The If statement provides conditional flow of control. The End If part is required. The statements after a logical expression will not be evaluated unless the logical expression evaluates to true (1). The conditional statement can be one of the following forms:

```
If <logical expression> Then
     <statement>
End If
or
If <logical expression> Then
     <statement1>
Else
     <statement2>
End If
or
If <logical expression1> Then
     <statement1>
ElseIf <logical expression2> Then
     <statement2>
End If
or
If <logical expression1> Then
     <statement1>
ElseIf <logical expression2> Then
```

```
            <statement2>
        Else
            <statement3>
        End If
```

Loop

There are two types of loop statements: **For/Next** and **Do/While:**

The For loop iterates through the loop by setting the *variable* initially at numeric *expression1* and incrementing this value by the Step amount (*expression 3*) with each pass through the loop. When the optional Step clause is omitted, the default clause of Step I is invoked. The loop terminates when the variable reaches a value greater than *expression2.*

```
    For <variable>=<expression1> To <expression2> [Step <expression3>]
        <statements1>
        (Exit For) Optional
        <statements2>
    Next
```

The **Do While** loop continues looping until the logical expression, *logExpression* becomes false (0). The **Exit** statements provides a way to terminate a loop without satisfying the normal termination criteria. When **Exit** is encountered, the loop breaks and execution resumes at the statement immediately following the loop. **Exit** is usually used in conjunction with a conditional statement.

**Do** while <logExpression>

<statements1>
(Exit while) 'Optional
<statements2>

**Loop**

Active Server

Active Server statements refer to the methods of pASP objects such as **Response** and **Request**. The **Response.Write** statement returns an output to the HTML stream. For example,
Response.write("<A Href=MCTP://MSNBC/ch2> click here to jump to sports </A>").

The Mobile Channels scripting environment exposes certain server variables. The **Request.ServerVariables** statement may be used to query the server variables. It takes a name string expression and returns a value string expression associated with the name. So
newURL-Request.servervariables("*URL*")
obtains the root URL for the channel of the page. And
platstr=Request. ServerVariables (*"Platform"*)
returns the platform string as one of the following:

| String | Platform |
| --- | --- |
| "WIN32_CE" | Windows CE |
| "WIN32_WINDOWS" | Windows 95/Windows 98 |
| "WIN32_NT" | Windows NT |

Similarly, the **Request.QueryString** statement returns the value of a specified argument passed to the page as part of the URL. For example, if URL for a
page is named as *"MCTP://msnbc/ch2 ? city=seattle",* then the statement
theCity = Request.Querystring("city")
assigns *Seattle* to the *the City* variable.

Set

The **Set** statement assigns a variable to an instance of an object. However, the Mobile Channels scripting environment supports only the **MobileChannels.Utilities** pseudo object. Thus the only usage of the **Set** statement is to create an **MobileChannels.Utilities** object and assigns it to an instance variable:

set mc_variable = Server.Create("MobileChannels.Utilities")

Line breaks are ignored when a statement is evaluated. Thus, statements can wrap to more than one line. The statement continuation character ("_") is recommended, but not mandatory. For example,

MyVar = "This is an example of " & _ "a statement appearing " & "on multiple lines." & MyVar

**Functions**

The following functions are exposed in the Mobile Channels scripting environment.

**Now**

Returns the current date and time and takes no argument. For example, Response.write("Today's date is " & **Now**).

**LocDate**

Returns the date using the current regional settings to format the date. For example,

Response.write( "Date: " & LocDate )

**Len**(*<string>*)

Returns the length of a string. For example

Len("Hello?")

returns 6.

**Mid**(*aStringExpression, startNumExpression,[length]*) Returns a sub-string of an existing string. The resulting sub-string is of *length* characters long and begins at the *Start* character number (counting from one, not zero) in the original *string* expression. For example,

Foo = Mid("This is my string", 9, 2).

*Foo* is now set to *"my"*.

Split(*aStringExpression, delimiterStringExpression*)

Parses a string into sub-strings based on a specified delimiter. The result is returned as an array of strings. For example,

Names = Split("Bob;Pred;Joe;",";")

results in the following sub-strings:

    **Names**(0)="Bob"
    **Names**(1)="Fred"
    **Names**(2)="Joe"
    **Names**(3)=""

**Asc**(*aStringExpression*)

Converts a character string into its numeric ASCII value and returns an numeric expression. If the *aStringExpression* is longer than one character, the function returns the ASCII value of the first character only.

**Chr**(*numericExpression*)

Converts an ASCII numeric value to the associated character and returns a string expression of one character long. For example, to create a string containing one newline character, use,

```
str = Chr(10)
```

**StrComp(** *S1, S2* [,*Compare*])

This function compares two strings, *S1 and S2,* optionally specifying the comparison mode, *Compare.* The *Compare* argument can be 0 or 1. If *Compare* is omitted, a binary comparison is performed.

This function returns one of the following values:

| Condition | Return Value |
|---|---|
| *S1* is less than *S2* | -1 |
| *S1* is equal to *S2* | 0 |
| *S1* is greater than *S2* | 1 |

**Random**(range)

The function generates a random number in the range 0 to one less than *range.* For example,

```
num = Random(10)
```

 generates random numbers from 0 to 9 inclusive.

**Mobile Channels Scripting Object**

**MobileChannels.Utilities** is a pseudo object in the Mobile Channels scripting environment that provides support for navigation and manipulation of objects within a CDF file. The **Utilities** object provides a number of methods for Mobile Channels scripting. These methods are summarized in the following table.

| Methods | Description |
|---|---|
| Data | Reads a block of data from a data item |
| Debug | Emits debug output to aid script development |
| Href | Returns an element's HREF |
| HrefExists | Returns true if an item exists in cache |
| IsSubscribed | Returns subscribed state of a channel/subchannel |
| IsUnread | Returns read/unread state of item or channel/subchannel |
| LibraryCall | Accesses a DLL special function |
| Locate | Jump to a specified ID within the CDF |
| Navigate | Traverses a CDF file |
| Tag | Returns the tag of an element in a CDF file |
| Title | Returns an element's title |
| Value | Returns the value of an element in a CDF file |

To use these services, the Utilities object must be instantiated first using the Set function as follows:
Set MC = Server.Create ("Mobilechannels.Utilities")
*MC* will be used below as a shorthand for the **MobileChannels.Utilities** scripting object, however, the object may be assigned to any variable name.

**Navigate Method of the Utilities Objects**

The **MC.Navigate()** command is a powerful, frequently used, and by far the most important method in pASP. It is designed to help examine the structure of a mobile channel, as represented in CDF, at run time. To understand the behavior of this command, a brief discussion of the background and terminology is helpful.
The basic operand of the **Navigate** command is an element that is the smallest unit of information in a CDF file. Every element has a *tag* and optionally a *value.* The **MC.Tag()** and **MC.Value()** methods of pASP may be used to fetch these strings for any element. The elements are organized into a tree structure as specified by XML as the CDF file is parsed. The **Navigate** command lets us move to specific elements within the tree, and to move between elements with certain relationships. This information can be very useful to the channel scripts which use CDF to dynamically generate the HTML pages for the channel at run time.

The discussions below will refer frequently to the sample CDF file and its associated parse tree, which are provided at the end of this document. The parse tree shows the internal representation of the sample CDF file. Each line of the parse tree is equivalent to an element, and all start with the tag for the element. The more indented elements are children of their less indented parents. Elements at the same level of indentation are siblings. In the CDF file, for example, the **BASE** element is a child of the top-level **CHANNEL** element. The first **HREF** element is a sibling of the **BASE** element. The **INTERVALTIME** element is a child of the **SCHEDULE** element.

Many elements are considered to have a default value. These are indicated in the parse tree by an "= [*string*]" expression following the tag of the element. The default value is determined in the following scheme. First, if the element under consideration has a string directly associated with it, the string is the default value. Next, if there is a child **VALUE** element, the child's value becomes the default one. If no **VALUE** element is provided, but a child **HREF** element is found, its value becomes the default value. If none of these can be found, the **VALUE** is empty. For example, the value of the first **ID** tag is a direct string, the **TITLE** tag has an explicit **VALUE** element, so this is used, and the value of first **LOGO** tag is its **HREF.** The **SCHEDULE** tag has no direct string, **VALUE** or **HREF** children, so its value is empty.

The **Navigate** function has the following syntax:

NewElem = **MC.Navigate**( StartElem, NavAction, [,Match] )

The function returns a new element, or 0 if the command could not find the specified element. You may test this return value using standard VBS comparisons such as:

```
IF NOT NewElem THEN
   ' not found
END IF
```

The *StartElem* parameter is the starting element from which to base relative movement commands. If you are using the absolute movement command *"Jump",* you must use "" for the *StartElem* parameter. But in all other cases it must be a valid element returned from a previous **Navigate()** command.

The *NavAction* parameter must be one of the following strings:

*"Jump"*

The *"Jump"* action is the first command used to get a starting element. It is equivalent to the **MC.Locate()** command (see below). The *StartElem* parameter must be an empty string. The *"Jump"* action navigates directly to a specific element in the CDF as identified by the supplied ID. For example, the following statement,

NewElem = MC.Navigate("", "Jump", "D1") jumps to the first data item element in the example CDF file. The *NewElem* will be the **ITEM** parent element to the **ID** element ("D1", about halfway down in the example CDF file).

*"First"*

The *"First"* action moves to the first element at a given level. For example, from the **ID** element of the first **LOGO** element in the example CDF file, a *"First"* action will move to the STYLE tag of that LOGO. More practical scenarios are to use this action to go back to the beginning of the list of ITEMs under a subchannel.

NewElem = MC.Navigate( StartElem, "First" )

*"Out"*

The *"Out"* action moves to the parent element from the current element, or to the left one indent in the parse tree diagram. For example, from the TITLE element of the example CDF, the *"Out"* action will result in the movement to the top-level channel element.

NewElem = MC.Navigate( StartElem. "Out" )

*"In"*

The *"In"* action moves to first child element beneath the current element. For example, from the first **USAGE** element in the example CDFfile, the "In" action will result in a movement to the **VALUE** element.

NewElem = MC.Navigate( StartElem, "In" )

*"Prev"*

The *"Prev"* action moves to the element at the same level immediately previous to the current element. If it does not find a previous element at the same level, it will return 0; it will not next out to the parent element. For example, if from the **BASE** element in the example CDF file, the *"Prev"* action will result in a move to the HREF element right before it. Calling "Prev" again will return 0 since there are no more siblings at this level.
NewElem = MC.Navigate(StartElem, "Prev")

*"Next"*

The "*Next*" action moves to the next element at the same level. As with the *"Prev"* action, if it finds no such sibling element, it returns zero. For example, from the first **LOGO** tag in the example CDF file, the *"Next"* action will result in a move to the second **LOGO** element.
NewElem = MC.Navigate( StartElem, "Next")

*"Match"*

The *"Match"* action attempts to find a sibling element with a tag matching the specified match string. It will traverse as many siblings as it needs to until it either finds a match or can find no more siblings. If the *"Match"* action starts from a matched element, it will simply return the current element. To match beyond the current element, the *"Match"* action must follow a *"Next"* action.
NewElem = MC.Navigate( StartElem, "Match", "TagToMatch")

*"InMatch"*

The *"InMatch"* action is the same as *"Match"* above except it begins its search at the first child of the current element. This can be useful for looking for specific subtags which modify the enclosing element. For example, the following statements,

```
UsageElem = MC.Navigate( StartElem, "inMatch". "USAGE" )
If UsageElem Then
  UsageVal = MC.Val( UsageElem )
  ' test for specific usage...
End If
```

look for the USAGE tag for a specific item.
The only actions that use the optional third parameter are *"Match"* and *"InMatch"*.

**Other Methods of the Utilities Object**

**Tag**

This method returns the tag name of an element: tagString=MC.Tag(elementID)

**Value**

This method returns the value of an element: valString=MC.Value(elementID)

**Data**

This method gets data from a Mobile Channels data file and returns an array of name-value pairs based on the current location and the specified block number.
The names are the field names as specified in an **ITEMFORMAT** statement and the values are the data items (lines) as fetched from the data file. In the following example, *dataItems* is an array to hold the data items, dataItems =MC.Data(elementID, blockNum) where *elementID* is the current location within the CDF file, for example, the **ID** item for the MCD file, and *blockNum* is the block number within the file. Blocks start with zero. So the first repeating block, if present, is always block number one (even if there is no header). The resultant array, *dataItems,* contains an element for each item (line) within the block. The items in a block counts from zero.

Each data item is, in effect, an object that supports the **Tag, Type**, and **Value** methods to expose its own properties.

**Tag**

*dataItems(index). Tag* returns the field name for the indexed array position, as declared in the **<ITEMFORMAT>** element.

**Value**

*dataItems(index). Value* returns the value of the field for the indexed array position.

**Type**

*dataItems(index).Type* returns the type as specified in the **<ITEMFORMAT>** statement. If no type is listed or if the **<ITEMFORMAT>** tag is missing, then the **Type** method returns "HTML". Other types include "TEXT", "IMG", and "HREF".

| Type | Description |
|------|-------------|
| HTML | The line item is HTML formatted content. This is the default type. |
| HREF | The line is a URL, (either http:// or mctp://). |
| IMG | The line contains the ID of an image item in the CDF file. |
| TEXT | Same as HTML. |

**Locate**

The function is of the following form: newElem = MC.Locate ("ID") and is a shorthand for the *"Jump"* action of the Navigate method: newElem = MC.Navigate( "", "Jump", "ID")

**LibraryCall**

This function allows a script to access a custom DLL to perform functions not available through standard scripting. The method is of the following form: Result = MC.LibraryCall( LibName, FuncName [,param]*)

First, the method checks for security to verify that the DLL has been properly registered for access via pASP scripting. An accessible DLL must have a registry entry in **\HKLM\Software\Microsoft\Mobile Channels\Components,** matching the name of the DLL.

Then the **LibraryCall** method dynamically loads the specified DLL by calling the **GetProcAddress** function to look up the specified function. Any additional parameters are then marshalled before being forwarded to the DLL function. Up to 8 optional parameters may be passed.

The DLL function must return a LPWSTR value. If the return value is NULL, **LibraryCall** returns zero (0). Otherwise, it returns the string itself as a standard pVBS string value.

*Debug(Mesg)*

The **Debug** method allows a debug string to be written out during the execution of the script. This may be useful during development to help examine program flow. The debug messages will appear in the console window of any attached debugger, similar to the **OutputDebugString** API.

The function does not return any value.

**HrefExists**(*Href*)

This method tests to determine whether the specified URL can be found in cache. This allows a script to gracefully handle missing images, data elements, or other components needed by the script. The URL must be a fully qualified http-style URL.

This method returns I if found in cache, else 0.

**Href**(*Elem*)

This method returns the full URL for the specified element if it is specified in the CDF file. It returns 0 if no URL can be found.

**IsSubscribed**(*ChanElem*)

This tests to see if the specified channel or subchannel element is currently subscribed to by the user. It returns 1 if the channel is subscribed, or 0 if it is not found or not subscribed.

Note: this will not work on items, only on channels. Furthermore, it always returns 1 when running on the desktop (in IE4).

**Title**

This method is of the following form: titlestring = MC.Title( Elemstring) and it attempts to decipher the title of a given element by the following means:

If there is an explicit **TITLE** tag for this element, the value of that is returned,
If it is an *.mcd* data item with an **ITEMFORMAT** specifying a **TITLE** field, the data item is opened and the title extracted therefrom,
If an **ID** element is provided, its value is returned,
If anything else, NULL is returned.

Note that this method does not mark a data item as "Read" as it fetches the title. This is different from using **Navigate** to get the title. The latter method marks the item as "Read", even if the user has not actually looked at it.

**IsUnread**

This method returns a boolean indicating whether the associated item or channel has been read. newContent = MC.Isunread( Elem )

The function returns non-zero value if called directly on an unread item. When called on a subchannel, it will return non-zero if any items *or other subchannels* within the subchannel have not been read.

**SetUnread**

This method sets the read/unread state for an item and returns no value. And it is of the following format. SetUnread(Elem [,Flag])

The *Elem* parameter should be a valid element from a prior **Navigate**() or **Locate**() call. The optional *Flag* parameter is a boolean used to mark the state of *Elem:* 0 for "unread" and 1 for "read". The default value of *Flag* is "unread".

**Note** Due to a limitation of the version 1.0 implementation of Mobile Channels, image items do not get marked as "read" automatially (as do MDC items). This results in the image remaining marked as "unread" even though it has been read. Further, all the parent subchannels will also show as "unread" as long as any images within are unread. To remedy this situation, the script author should manually mark each image as "unread" each time it is displayed. The **SetUnread()** utility is the correct way to achieve this.

**Channel Browser and Active Desktop HTML Extensions**

Several HTML extensions provide additional functionality for writing more advanced scripts for Active Desktop and for controlling page updates in Channel Browser.

**Application Links**

Windows CE Active Desktop supports a special HTML Href for launching an application from a hyperlink. The format is: <A HREF="mcexe://[appname]">Launch Text</A> *appname* is the name of the application to be launched when the link is clicked.

The application must have been registered by placing a value of the same name as the **.exe** in the registry at **\HKLM\Software\Microsoft\Mobile Cbannels\Components.**

**META Tags**

Channel Browser and Active Desktop recognize the following special META tags. Embedding these META tags in the header of a page, either directly or via scripting can cause the page to be automatically handled or updated in a particular manner. Note that these META tags (with the exception of *Refresh)* are ignored by IE4.

The META tags are summarized in the following table.

| Http_Equiv | Description | Support |
|---|---|---|
| Notify | Catch cache or database updates | Active Desktop and Channel Browser. |
| Refresh | Reload after time interval | Active Desktop |
| LaunchApp | Execute application for desktop component | Active Desktop |
| Autosize | Control image scaling | Channel Browser |

The following are some detailed discussions of each tag.

Notify

This META tag allows a page to be automatically updated when there is an update to a particular database, or when a particular item is updated in cache. This can be used to regenerate a page automatically when a new version of it (or one of its components) comes in via sync or other mechanism. The two forms of this META tag are:

```
<META HTTP-EQUIV="Notify"
      CONTENT="DBUPDATE=[DBname]; URL=[Refreshurl]">
<META HTTP-EQUIV="Notify"
      CONTENT="CACHEUPDATE"=[WatchUrl]; URL=[Refreshurl]">
```

*DBname* is the name of the database to monitor for updates. *WatchUrl* is the URL of an item to watch for cache updates on. *RefreshUrl* is the URL to load if an update is detected.

Refresh

This META tag causes a page to be automatically reloaded after a specified time interval. The form is:
<META HTTP-EQUIV="Refresh" CONTENT=" [secs];URL=[Refreshur]"> *secs* sets the number of seconds until the page will be reloaded. *RefteshUrl* is the URL to load after the specified interval.

LaunchApp

This META tag allows an application to be launched by clicking on the header of an Active Desktop component on the device. The form is:
<META HTTP-EQUIV="LaunchApp" CONTENT="[appname][?params]">
*appname* is the name of the executable to launch.
*params* is an optional comma separated list of *params* to be passed to the application upon invocation

The application must have been registered by placing a value of the same name as the **.exe** in the registry in **\HKLM\Software\Microsoft\Mobile**

**Channels\Components.**

Autosize

This META tag allows the default image scaling behavior to be disabled for a particular page. The HTML control will, by default, attempt to scale images for display on the smaller form factor screen. However, if this META is specified in the page header the images will displayed at the full size causing scrollbars to appear if needed. The form is:
<META HTTP-EQUIV="Autosize" CONTENT="Off">
Note that since the default value is always "On" there is no need for any other value in the CONTENT field.

**Example CDF File**

```
<?XML version="1.0"?>
<CHANNEL
  HREF="mctp://mysite/34droad/34droad.cdf "
  BASE="http://mySite/" ID="34droad">
  <SELF HREF="http://mySite/34droad/34droad.cdf" />
  <SCHEDULE><INTERVALTIME MIN="40"/></SCHEDULE>
  <USAGE VALUE="Mobilechannel"/>
  <TITLE>3 4 D Road</>
  <ABSTRACT>Things to think about while you're away...</>
  <LOGO STYLE="IMAGE" HREF="34droad/34logo.gif" ID="LOGO"/>
  <LOGO STYLE="ICON" HREF="34droad/34icon.gif" ID="ICON"/>
  <CHANSCRIPT VALUE="SS"/>
  <ITEMSCRIPT VALUE="S5"/>
  <ITEM HREF="34droad/34.mcs" ID="S5">
      <ABSTRACT>Things to think about while you're away...</>
  </ITEM>
  <ITEM HREF="cgi-bin/deep1.mcd?1" ID="D1">
      <USAGE VALUE="MobileChannel"/>
      <LOG VALUE="document:view"/>
  </ITEM>
  <ITEM HREF="cgi-bin/deepl.mcd?2" ID-"D2">
      <USAGE VALUE="MobileChannel"/>
      <LOG VALUE="document:view"/>
  </ITEM>
  <ITEM HREF="cgi-bin/deepl.mcd?3" ID=-"D3">
      <USAGE VALUE-"MobileChannel"/>
      <LOG VALUE-"document:view"/>
  </ITEM>
  <ITEM HREF="34droad/34logo.gif" ID="LOGO">
      <USAGE VALUE="None"/>
  </ITEM>
  <ITEM HREF="34droad/34icon.gif" ID="ICON">
      <USAGE VALUE="None"/>
  </ITEM>
  <ITEM HREF="34droad/34main.gif" ID="MGIF">
      <USAGE VALUE-"None"/>
      <LOG VALUE="document:view"/>
  </ITEM>
</CHANNEL>
```

**Parse Tree of the example CDF file**

```
CHANNEL = mctp://mysite/34droad/34droad.cdf
  HREF = mctp://mysite/34droad/34droad.cdf
  BASE http://mysite/
  ID = 34droad
  SELF = http://mysite/34droad/34droad.cdf
      HREF= http://mysite/34droad/34droad.cdf
  SCHEDULE
      INTERVALTIME
          MIN = 40
  USAGE = MobileChannel
      VALUE = MobileChannel
  TITLE = 3 4 D Road
      VALUE = 3 4 D Road
  ABSTRACT = Things to think about while you're away...
```

```
                    VALUE = Things to think about while you're away...
          LOGO = 34droad/34logo.gif
                STYLE = IMAGE
                HREF = 34droad/34logo.gif
                ID = LOGO
          LOGO = 34droad/34icon.gif
                STYLE = ICON
                HREF = 34droad/34icon.gif
                ID = ICON
       CHANSCRIPT = SS
                VALUE = SS
        ITEMSCRIPT = SS
             VALUE = SS
        ITEM = 34droad/34.mcs
              HREF = 34droad/34.mcs
              ID = SS
               ABSTRACT = Things to think about while you're away...
                    VALUE = Things to think about while you're away...
        ITEM = cgi-bin/deep1.mcd?1
              HREF = cgi-bin/deep1.mcd?1
              ID = D1
              USAGE = Mobilechannel
                  VALUE = MobileChannel
              LOG = document:view
                  VALUE = document:view
        ITEM = cgi-bin/deep1.mcd?2
              HREF = cgi-bin/deep1.mcd?2
              ID = D2
              USAGE = MobileChannel
                  VALUE = MobileChannel
              LOG = document:view
                 VALUE = document:view
        ITEM = cgi-bin/deep1.mcd?3
              HREF = cgi-bin/deepl.mcd?3
              ID = D3
              USAGE = MobileChannel
                 VALUE = MobileChannel
              LOG = document:view
                 VALUE = document:view
      ITEM = 34droad/34logo.gif
            HREF = 34droad/34logo.gif
            ID = LOGO
            USAGE = None
                VALUE None
      ITEM = 34droad/34icon.gif
            HREF = 34droad/34icon.gif
            ID = ICON
            USAGE = None
                VALUE = None
      ITEM = 34droad/34main.gif
            HREF = 34droad/34main.gif
            ID = MGIF
            USAGE = None
                VALUE = None
            LOG = document:view
                VALUE = document:view
```

## Claims

1. A system for providing information content from a content provider (12) to a mobile device (18), comprising:

a provider component including:

a first store storing the content as a data file and a corresponding separate script file, the data file including data indicative of the content to be rendered and the script file including a script indicative of a particular appearance which the data is to take upon being rendered, wherein the script file and the data file are transmittable independently of one another; and
means for implementing
a first translator layer (254) coupled to the first store and configured to retrieve the data file and the script file and translate the data and script from an untranslated form to a translated form, wherein the first translator layer (254) is configured to provide tag information indicative of translation operations performed on the script and data and to provide the tag information along with the script and data in the translated form;

a transmitter (258) coupleable to the first data store and configured to transmit the content to the mobile device (18); and
a mobile device (18) component, including:

a receiver (22) configured to receive the content from the transmitter;
means for implementing a second translator layer (209) coupled to the receiver (22) and configured to translate the data and script from the translated form to the untranslated form based on the tag information;
a second store;
a router (210), coupled to the receiver (22) and the second store and configured to provide the script file and the data file to the second store; and
a transport coupled to the second store and configured to selectively retrieve the data file and execute the script to render the data in accordance with said particular appearance.

2. The system of claim 1 wherein the first translator layer (254) comprises a compressor (260) configured to compress the data and script from an uncompressed form to a compressed form and wherein the second translator layer (209) comprises a decompresser (270) coupled to the receiver (22) and configured to decompress the data and script from the compressed form to the decompressed form.

3. The system of claim 1 wherein the first translator layer (254) comprises an encryptor (262) configured to encrypt the script and data and wherein the second translator layer (209) comprises a decryptor (268) configured to decrypt the data and the script.

4. The system of claim 1 wherein the first translator layer (254) comprises an encoder (264) configured to encode the script and data and wherein the second translator layer (209) comprises a decoder (266) configured to decode the script and data.

5. The system of claim 1 wherein the first translation layer (254) comprises a packager (256) configured to divide the script and data into portions and translate the portions into packets suitable for transmission and wherein the second translation layer (209) comprises an unpackager (212) configured to untranslate and assemble the packets.

6. The system of claim 1 wherein the transmitter (258) comprises:

a wireless transmitter for transmitting the content over a wireless transmission link and wherein the receiver (22) comprises a wireless receiver (37) configured to receive the content over the wireless transmission link.

7. The system of claim 1 and further comprising:

a desktop computer (16) selectively coupleable to the provider component and including a retrieval component configured to retrieve the data file and the script file and a synchronization component (26) configured to be selectively coupleable to the mobile device (18).

8. The system of claim 7 wherein the receiver (22) comprises:

a synchronization component (28) on the mobile device (18) selectively coupleable to the synchronization component (26) on the desktop computer (16), wherein the synchronization component (26) on the desktop computer (16) and the synchronization component (28) on the mobile device (18) are configured to selectively synchronize the script file and the data file to the mobile device (18).

9. The system of claim 8 wherein the first store includes a definition file describing characteristics of the information content including a logging characteristic and wherein the transport logs rendering information indicative of rendering of the information content on the mobile device (18).

10. The system of claim 9 wherein the synchronization component (28) on the mobile device (18) is configured to synchronize the rendering information to the desktop computer (16) and wherein the retrieval component is configured to provide the rendering information to the provider component.

11. The system of claim 10 wherein the rendering information includes a rendering count indicative of a number of times the information content is rendered on the mobile device (18) and a rendering duration indicative of a duration for which the information content is rendered on the mobile device (18).

12. The system of claim 7 wherein the provider component further comprises:

a wireless transmitter for transmitting the content over a wireless transmission link and wherein the receiver (22) further comprises a wireless receiver (37) configured to receive the content over the wireless transmission link.

13. The system of claim 1 wherein the information content comprises information rendered using a processor-independent language.

14. The system of claim 13 wherein the information content comprises information rendered using hypertext markup language HTML.

15. The system of claim 1 wherein the first translator layer (254) is adapted to provide the script and data, in the translated form, with a plurality of separate filtering segments, the receiver (22) on the mobile device (18) is adapted to selectively receive and discard the script and data based on a first of the plurality of filtering segments, and the second translator layer (209) is adapted to selectively receive and discard the script and data based on a second of the plurality of filtering segments.

16. The system of claim 15 wherein the information content comprises group information and topic information on a subscribable channel, wherein the second of the plurality of filtering segments includes a first filtering portion corresponding to the group information and a second filtering portion corresponding to the topic information and wherein the second translator layer is adapted to filter based on the group and topic filtering portions independently of one another.

17. A computer readable medium including instructions readable by a mobile device (18) which, when implemented, cause the mobile device (18) to handle information by performing steps comprising:

intermittently receiving a data file, a corresponding script file, and tag information, wherein the data file and the corresponding script file are received in a translated form, the data file including data indicative of information and the script file including script information indicative of a particular appearance which the information is to take upon being rendered, the data file and corresponding script file being independently receivable by the mobile device (18);
converting the data and script file into an untranslated form based on the tag information;
storing the script file and data file; and
retrieving the data from the data file and executing the script in the corresponding script file to render the data.

18. The computer readable medium of claim 17 including instructions readable by a mobile device (18) which, when implemented, cause the mobile device (18) to handle information by performing steps comprising:

intermittently receiving an updated data file including updated data; and
executing the script in the corresponding script file, already stored on the mobile device (18), to render the updated data.

19. The computer readable medium of claim 18 wherein the step of executing the script in the corresponding script file, already on the mobile device (18), is performed in response to receiving the updated data.

20. The computer readable medium of claim 19 wherein executing the script comprises:

rendering the data in a processor independent form.

21. The computer readable medium of claim 20 wherein executing the script comprises:

rendering the data in hypertext markup language HTML form.

22. The computer readable medium of claim 17 further including instructions readable by a mobile device (18) which, when implemented, cause the mobile device (18) to handle information by performing steps comprising:

intermittently receiving an updated script file including updated script; and
executing the updated script on data in the corresponding data file, already stored on the mobile device (18), to render the data according to the updated script.

23. The computer readable medium of claim 17 further including instructions readable by a mobile device (18) which, when implemented, cause the mobile device (18) to handle information by performing steps comprising:

intermittently receiving additional script files including additional script; and
intermittently receiving additional data files, corresponding to the additional script files and including additional data.

24. The computer readable medium of claim 23 further including instructions readable by a mobile device (18) which, when implemented, cause the mobile device (18) to handle information by performing steps comprising:

executing the additional script in the additional script files on data in the corresponding additional data files to render the additional data according to the additional script.

25. The computer readable medium of claim 17 further including instructions readable by a mobile device (18) which, when implemented, cause the mobile device (18) to handle information by performing steps comprising:

logging rendering data based on rendering of the information.

26. The computer readable medium of claim 25 further including instructions readable by a mobile device (18) which, when implemented, cause the mobile device (18) to handle information by performing steps comprising:

synchronizing the rendering data to a desktop computer.

27. The computer readable medium of claim 17 further including instructions readable by a mobile device (18) which, when implemented, cause the mobile device (18) to handle information by performing steps comprising:

receiving the script file and data file with a plurality of separate filtering segments; and
selectively receiving and discarding the script and data based on the plurality of filtering segments.

28. The computer readable medium of claim 27 wherein the information content comprises group information and topic information on a subscribable channel, and further including instructions readable by a mobile device (18) which, when implemented, cause the mobile device (18) to handle information by performing steps comprising:

selectively receiving and discarding the script and data based on a first filtering portion corresponding to the group information and a second filtering portion corresponding to the topic information, wherein the filtering is based on the group and topic filtering portions independently of one another.

29. A mobile device (18), comprising:

a receiver (22) configured to intermittently receive a data file, a corresponding script file, and tag information, wherein the data file and the corresponding script file are received in a translated form, the data file including data indicative of information to be rendered and the script file including script information indicative of a particular appearance which the data is to take upon being rendered, the data file and corresponding script file being independently receivable by the mobile device (18);

a translator configured to translate the data and the corresponding script from the translated form to an untranslated form based on the tag information,

a memory (206) for storing the script file and data file; and

a router (210), coupled to the receiver (22) and the memory (206) and configured to provide the script file and the data file to the memory (206); and

a transport coupled to the memory (206) and configured to selectively retrieve the data file and execute the script to render the data in accordance with said particular appearance.

30. A method of rendering information on a mobile device (18), comprising:

intermittently receiving a translated data file, a corresponding translated script file, and tag information, wherein the tag information is representative of translation operations used to translate the data file and the corresponding script file, the data file including data indicative of information to be rendered and the script file including script information indicative of a particular appearance which the data is to take upon being rendered, the data file and corresponding script file being independently receivable by the mobile device (18);

converting the data and the script into an untranslated form based on the tag information;

storing the script file and data file; and

retrieving the data from the data file and executing the script in the corresponding script file to render the data.

**Patentansprüche**

1. System zur Bereitstellung eines Informationsinhalts von einem Inhaltsanbieter (12) an eine Mobilvorrichtung (18), welches Folgendes umfasst:

eine Anbieterkomponente, die Folgendes aufweist:

einen ersten Speicher, welcher den Inhalt als eine Datendatei und eine dazugehörige separate Skriptdatei speichert, wobei die Datendatei Daten enthält, die den wiederzugebenden Inhalt angeben, und die Skriptdatei ein Skript enthält, das ein bestimmes Erscheinungsbild angibt, das die Daten bei ihrer Wiedergabe annehmen sollen, wobei die Skriptdatei und die Datendatei unabhängig voneinander übertragen werden können; und

Mittel zur Implementierung einer ersten Übersetzerschicht (254), die mit dem ersten Speicher gekoppelt sind und zum Abrufen der Datendatei und der Skriptdatei und zum Übersetzen der Daten und des Skripts von einer nicht übersetzten Form in eine übersetzte Form konfiguriert sind, wobei die erste Übersetzerschicht (254) zur Bereitstellung von Tag-Informationen, die die auf das Skript und die Daten angewendeten Übersetzungsvorgänge angeben, und zur Bereitstellung der Tag-Informationen zusammen mit dem Skript und den Daten in der übersetzten Form konfiguriert ist;

einen Sender (258), der mit dem ersten Datenspeicher koppelbar und zur Übertragung des Inhalts an die Mobilvorrichtung (18) konfiguriert ist; und

eine Mobilvorrichtungs(18)komponente, welche Folgendes aufweist:

einen Empfänger (22), der zum Empfang des Inhalts von dem Sender konfiguriert ist;

Mittel zur Implementierung einer zweiten Übersetzerschicht (209), die mit dem Empfänger (22) gekoppelt sind und zum Übersetzen der Daten und des Skripts von der übersetzten Form in die nicht übersetzte Form basierend auf den Tag-Informationen konfiguriert sind;

einen zweiten Speicher;

einen Router (210), der mit dem Empfänger (22) und dem zweiten Speicher gekoppelt ist und zur Bereitstellung der Skriptdatei und der Datendatei an den zweiten Speicher konfiguriert ist; und

einen Transport, der mit dem zweiten Speicher gekoppelt ist und zum selektiven Abrufen der Datendatei und zum Ausführen des Skripts zur Wiedergabe der Daten gemäß dem bestimmten Erscheinungsbild konfiguriert ist.

2. System nach Anspruch 1, **dadurch gekennzeichnet, dass** die erste Übersetzerschicht (254) einen Komprimierer (260) aufweist, der zum Komprimieren der Daten und des Skripts von einer unkomprimierten Form in eine komprimierte Form konfiguriert ist, und dass die zweite Übersetzerschicht (209) einen Dekomprimierer (270) aufweist, der mit dem Empfänger (22) gekoppelt ist und zum Dekomprimieren der Daten und des Skripts von der komprimierten Form in die dekomprimierte Form konfiguriert ist.

3. System nach Anspruch 1, **dadurch gekennzeichnet, dass** die erste Übersetzerschicht (254) einen Verschlüsseler (262) aufweist, der zum Verschlüsseln des Skripts und der Daten konfiguriert ist, und dass die zweite Übersetzerschicht (209) einen Entschlüsseler (268) aufweist, der zum Entschlüsseln der Daten und des Skripts konfiguriert ist.

4. System nach Anspruch 1, **dadurch gekennzeichnet, dass** die erste Übersetzerschicht (254) einen Codierer (264) aufweist, der zum Codieren des Skripts und der Daten konfiguriert ist, und dass die zweite Übersetzerschicht (209) einen Decodierer (266) aufweist, der zum Decodieren des Skripts und der Daten konfiguriert ist.

5. System nach Anspruch 1, **dadurch gekennzeichnet, dass** die erste Übersetzerschicht (254) einen Paketierer (256) aufweist, der zum Aufteilen des Skripts und der Daten in Teile und zum Umwandeln der Teile in Pakete, die zur Übertragung geeignet sind, konfiguriert ist, und dass die zweite Übersetzerschicht (209) einen Depaketierer (212) aufweist, der zum Rückwandeln und Anordnen der Pakete konfiguriert ist.

6. System nach Anspruch 1, **dadurch gekennzeichnet, dass** der Sender (258) Folgendes umfasst:

einen drahtlosen Sender zur Übertragung des Inhalts über eine drahtlose Übertragungsleitung, und wobei der Empfänger (22) einen drahtlosen Empfänger (37) aufweist, der zum Empfang des Inhalts über die drahtlose Übertragungsleitung konfiguriert ist.

7. System nach Anspruch 1, welches des Weiteren umfasst:

einen Desktopcomputer (16), der selektiv an die Anbieterkomponente koppelbar ist und der eine Abrufkomponente, die zum Abrufen der Datendatei und der Skriptdatei konfiguriert ist, sowie eine Synchronisationskomponente (26), die so konfiguriert ist, dass sie selektiv an die Mobilvorrichtung koppelbar ist, aufweist.

8. System nach Anspruch 7, **dadurch gekennzeichnet, dass** der Empfänger (22) Folgendes umfasst:

eine Synchronisationskomponente (28) auf der Mobilvorrichtung (18), die mit der Synchronisationskomponente (26) auf dem Desktopcomputer (16) koppelbar ist, wobei die Synchronisationskomponente (26) auf dem Desktopcomputer (16) und die Synchronisationskomponente (28) auf der Mobilvorrichtung (18) zum selektiven Synchronisieren der Skriptdatei und der Datendatei mit der Mobilvorrichtung (18) konfiguriert sind.

9. System nach Anspruch 8, **dadurch gekennzeichnet, dass** der erste Speicher eine Definitionsdatei enthält, die Eigenschaften des Informationsinhalts einschließlich einer Protokolleigenschaft beschreibt, und dass der Transport Wiedergabeinformationen, die die Wiedergabe des Informationsinhalts auf der Mobilvorrichtung (18) angeben, protokolliert.

10. System nach Anspruch 9, **dadurch gekennzeichnet, dass** die Synchronisationskomponente (28) auf der Mobilvorrichtung (18) zum Synchronisieren der Wiedergabeinformationen mit dem Desktopcomputer (16) konfiguriert ist, und dass die Abrufkomponente zur Bereitstellung der Wiedergabeinformationen an die Anbieterkomponente konfiguriert ist.

11. System nach Anspruch 10, **dadurch gekennzeichnet, dass** die Wiedergabeinformationen eine Wiedergabezählung, die die Anzahl der Male angibt, die der Informationsinhalt auf der Mobilvorrichtung (18) wiedergegeben wird, und eine Wiedergabedauer, die die Zeitdauer angibt, die der Informationsinhalt auf der Mobilvorrichtung (18) wiedergegeben wird, umfasst.

12. System nach Anspruch 7, **dadurch gekennzeichnet, dass** die Anbieterkomponente des Weiteren Folgendes aufweist:

einen drahtlosen Sender zur Übertragung des Inhalts über eine drahtlose Übertragungsleitung, und wobei der Empfänger (22) des Weiteren einen drahtlosen Empfänger (37) aufweist, der zum Empfang des Inhalts über die drahtlose Übertragungsleitung konfiguriert ist.

**13.** System nach Anspruch 1, **dadurch gekennzeichnet, dass** der Informationsinhalt Informationen aufweist, die unter Verwendung einer prozessorunabhängigen Sprache wiedergegeben werden.

**14.** System nach Anspruch 13, **dadurch gekennzeichnet, dass** der Informationsinhalt Informationen aufweist, die unter Verwendung von HTML bzw. hyper text markup language wiedergegeben werden.

**15.** System nach Anspruch 1, **dadurch gekennzeichnet, dass** die erste Übersetzerschicht (254) zur Bereitstellung des Skripts und der Daten in der übersetzten Form mit einer Vielzahl von separaten Filtersegmenten ausgelegt ist, wobei der Empfänger (22) auf der Mobilvorrichtung (18) zum selektiven Empfang und Verwerfen des Skripts und der Daten basierend auf einem ersten aus einer Vielzahl von Filtersegmenten ausgelegt ist, und dass die zweite Übersetzungsschicht (209) zum selektiven Empfang und Verwerfen des Skripts und der Daten basierend auf einem zweiten aus einer Vielzahl von Filtersegmenten ausgelegt ist.

**16.** System nach Anspruch 15, **dadurch gekennzeichnet, dass** der Informationsinhalt Gruppeninformationen und Themeninformationen auf einem abonnierbaren Kanal aufweist, wobei das zweite aus der Vielzahl von Filtersegmenten einen den Gruppeninformationen entsprechenden ersten Filterabschnitt und einen den Themeninformationen entsprechenden zweiten Filterabschnitt aufweist, und dass die zweite Übersetzerschicht derart ausgelegt ist, dass sie basierend auf den Gruppen- und Themenfilterabschnitten unabhängig voneinander filtert.

**17.** Computerlesbarer Datenträger mit Anweisungen, die von einer Mobilvorrichtung (18) gelesen werden können, die bei ihrer Implementierung die Mobilvorrichtung (18) veranlassen, Informationen durch Ausführung von Schritten zu verarbeiten, wobei die Schritte Folgendes aufweisen:

periodischer Empfang einer Datendatei, einer dazugehörigen Skriptdatei sowie von Tag-Informationen, wobei die Datendatei und die dazugehörige Skriptdatei in einer übersetzten Form empfangen werden, wobei die Datendatei Daten enthält, die Informationen angeben, und die Skriptdatei Skriptinformationen enthält, die ein bestimmtes Erscheinungsbild angeben, das die Informationen bei ihrer Wiedergabe annehmen sollen, wobei die Datendatei und dazugehörige Skriptdatei von der Mobilvorrichtung (18) unabhängig empfangen werden können;
Konvertierung der Daten- und Skriptdatei in eine nicht übersetzte Form basierend auf den Tag-Informationen;
Speichern der Skriptdatei und der Datendatei; und
Abrufen der Daten von der Datendatei und Ausführen des Skripts in der dazugehörigen Skriptdatei zur Wiedergabe der Daten.

**18.** Computerlesbarer Datenträger nach Anspruch 17, welcher Anweisungen enthält, die von einer Mobilvorrichtung (18) gelesen werden können, die bei ihrer Implementierung die Mobilvorrichtung (18) veranlassen, Informationen durch Ausführung von Schritten zu verarbeiten, wobei die Schritte Folgendes aufweisen:

periodischer Empfang einer aktualisierten Datendatei einschließlich aktualisierter Daten; und
Ausführen des Skripts in der dazugehörigen Skriptdatei, die schon auf der Mobilvorrichtung (18) gespeichert ist, zur Wiedergabe der aktualisierten Daten.

**19.** Computerlesbarer Datenträger nach Anspruch 18, **dadurch gekennzeichnet, dass** der Schritt der Ausführung des Skripts in der dazugehörigen Skriptdatei, die schon auf der Mobilvorrichtung (18) gespeichert ist, ansprechend auf den Empfang der aktualisierten Daten durchgeführt wird.

**20.** Computerlesbarer Datenträger nach Anspruch 19, **dadurch gekennzeichnet, dass** die Ausführung des Skripts Folgendes umfasst:

Wiedergabe der Daten in einer prozessorunabhängigen Form.

**21.** Computerlesbarer Datenträger nach Anspruch 20, **dadurch gekennzeichnet, dass** die Ausführung des Skripts Folgendes umfasst:

Wiedergabe der Daten in HTML-Form.

**22.** Computerlesbarer Datenträger nach Anspruch 17, welcher des Weiteren von einer Mobilvorrichtung (18) lesbare Anweisungen aufweist, die bei ihrer Implementierung die Mobilvorrichtung (18) veranlassen, die Informationen durch Ausführung folgender Schritte zu verarbeiten:

periodischer Empfang einer aktualisierten Skriptdatei einschließlich aktualiertem Skript; und
Ausführung des aktualisierten Skripts auf Daten in der dazugehörigen Datendatei, die schon auf der Mobilvorrichtung (18) gespeichert ist, zur Wiedergabe der Daten gemäß dem aktualisierten Skript.

23. Computerlesbarer Datenträger nach Anspruch 17, welcher des Weiteren von einer Mobilvorrichtung (18) lesbare Anweisungen aufweist, die bei ihrer Implementierung die Mobilvorrichtung (18) veranlassen, die Informationen durch Ausführung folgender Schritte zu verarbeiten:

periodischer Empfang zusätzlicher Skriptdateien einschließlich zusätzlichem Skript; und
periodischer Empfang zusätzlicher, zu den zusätzlichen Skripdateien gehörenden, Datendateien einschließlich zusätzlicher Daten.

24. Computerlesbarer Datenträger nach Anspruch 23, welcher des Weiteren von einer Mobilstation (18) lesbare Anweisungen aufweist, die bei ihrer Implementierung die Mobilvorrichtung (18) veranlassen, die Informationen durch Ausführung folgender Schritte zu verarbeiten:

Ausführung des zusätzlichen Skripts in den zusätzlichen Skriptdateien auf Daten in den dazugehörigen zusätzlichen Datendateien zur Wiedergabe der zusätzlichen Daten gemäß dem zusätzlichen Skript.

25. Computerlesbarer Datenträger nach Anspruch 17, welcher des Weiteren von einer Mobilstation (18) lesbare Anweisungen aufweist, die bei ihrer Implementierung die Mobilvorrichtung (18) veranlassen, die Informationen durch Ausführung folgender Schritte zu verarbeiten:

Protokollieren der Wiedergabedaten basierend auf der Wiedergabe der Informationen.

26. Computerlesbarer Datenträger nach Anspruch 25, welcher des Weiteren von einer Mobilstation (18) lesbare Anweisungen aufweist, die bei ihrer Implementierung die Mobilvorrichtung (18) veranlassen, die Informationen durch Ausführung folgender Schritte zu verarbeiten:

Synchronisierung der Wiedergabedaten mit einem Desktopcomputer.

27. Computerlesbarer Datenträger nach Anspruch 17, welcher des Weiteren von einer Mobilstation (18) lesbare Anweisungen aufweist, die bei ihrer Implementierung die Mobilvorrichtung (18) veranlassen, die Informationen durch Ausführung folgender Schritte zu verarbeiten:

Empfang der Skriptdatei und der Datendatei mit einer Vielzahl von separaten Filtersegmenten; und
selektiver Empfang und selektives Verwerfen des Skripts und der Daten basierend auf der Vielzahl von Filtersegmenten.

28. Computerlesbarer Datenträger von Anspruch 27, **dadurch gekennzeichnet, dass** der Informationsinhalt Gruppeninformationen und Themeninformationen auf einem abonnierbaren Kanal und des Weiteren von einer Mobilstation (18) lesbare Anweisungen aufweist, die bei ihrer Implementierung die Mobilvorrichtung (18) veranlassen, die Informationen durch Ausführung folgender Schritte zu verarbeiten:

selektiver Empfang und selektives Verwerfen des Skripts und der Daten basierend auf einem den Gruppeninformationen entsprechenden ersten Filterabschnitt und einem den Themeninformationen entsprechenden zweiten Filterabschnitt, wobei das Filtern auf den Gruppen- und Themenfilterabschnitten unabhängig voneinander basiert.

29. Mobilvorrichtung (18), die Folgendes aufweist:

einen Empfänger (22), der zum periodischen Empfang einer Datendatei, einer dazugehörigen Skriptdatei sowie von Tag-Informationen konfiguriert ist, wobei die Datendatei und die dazugehörige Skriptdatei in einer übersetzten Form empfangen werden, wobei die Datendatei Daten enthält, die wiederzugebende Informationen angeben, und die Skriptdatei Skriptinformationen enthält, die ein bestimmtes Erscheinungsbild angeben, das die Daten bei der Wiedergabe annehmen sollen, wobei die Datendatei und die dazugehörige Skriptdatei von der Mobilvorrichtung (18) unabhängig empfangen werden können;
einen Übersetzer, der zur Übersetzung der Daten und des dazugehörigen Skripts von der übersetzten Form in eine nicht übersetzte Form basierend auf den Tag-Informationen konfiguriert ist;
einen Speicher (206) zum Speichern der Skriptdatei und der Datendatei; und
einen Router (210), der mit dem Empfänger (22) und dem Speicher (206) gekoppelt ist und zur Bereitstellung der Skriptdatei und der Datendatei an den Speicher (206) konfiguriert ist; und
einen Transport, der mit dem Speicher (206) gekoppelt ist und zum selektiven Abrufen der Datendatei und zum Ausführen des Skripts zur Wiedergabe der Daten gemäß dem bestimmten Erscheinungsbild konfiguriert ist.

30. Verfahren zur Wiedergabe von Informationen auf einer Mobilvorrichtung (18), welches Folgendes umfasst:

periodischer Empfang einer übersetzten Datendatei, einer dazugehörigen übersetzten Skriptdatei sowie von Tag-Informationen, wobei die Tag-Informationen die Übersetzungsvorgänge angeben, die zur Übersetzung der Datendatei und der dazugehörigen Skriptdatei verwendet wurden, wobei die Datendatei Daten enthält, die wiederzugebende Informationen angeben und die Skriptdatei Skriptinformationen enthält, die ein bestimmtes Erscheinungsbild angeben, das die Daten bei der Wiedergabe annehmen sollen, wobei die Datendatei und die dazugehörige Skriptdatei von der Mobilvorrichtung (18) unabhängig empfangen werden können;
Konvertierung der Daten und des Skripts in eine nicht übersetzte Form basierend auf den Tag-Informationen;
Speichern der Skriptdatei und der Datendatei; und
Abrufen der Daten von der Datendatei und Ausführen des Skripts in der dazugehörigen Skriptdatei zur Wiedergabe der Daten.

## Revendications

1. Système pour fournir un contenu d'informations d'un fournisseur de contenu (12) à un dispositif mobile (18), comprenant :

un composant fournisseur comportant :

une première mémoire stockant le contenu sous la forme d'un fichier de données et d'un fichier de script séparé correspondant, le fichier de données contenant des données représentatives du contenu devant être soumis à un rendu et le fichier de script contenant un script représentatif d'un aspect particulier que les données doivent adopter lorsqu'elles sont soumises à un rendu, le fichier de script et le fichier de données étant transmissibles indépendamment l'un de l'autre ; et
un moyen pour mettre en oeuvre une première couche de traduction (254) reliée à la première mémoire et configurée pour extraire le fichier de données et le fichier de script et traduire les données et le script d'une forme non traduite en une forme traduite, dans lequel la première couche de traduction (254) est configurée pour fournir des informations de balisage représentatives d'opérations de traduction effectuées sur le script et les données et pour fournir les informations de balisage en association avec le script et les données sous la forme traduite ;

un émetteur (258) pouvant être relié à la première mémoire de données et configuré pour émettre le contenu vers le dispositif mobile (18) ; et
un composant formant dispositif mobile (18), comprenant :

un récepteur (22) configuré pour recevoir le contenu de l'émetteur ;
un moyen pour mettre en oeuvre une deuxième couche de traduction (209) reliée au récepteur (22) et configurée pour traduire les données et le script de la forme traduite à la forme non traduite sur la base des informations de balisage ;
une deuxième mémoire ;
un routeur (210), relié au récepteur (22) et à la deuxième mémoire et configuré pour fournir le fichier de script et le fichier de données à la deuxième mémoire ; et
un moyen de transport relié à la deuxième mémoire et configuré pour extraire sélectivement le fichier de données et exécuter le script pour soumettre à un rendu les données en conformité avec ledit aspect particulier.

2. Système selon la revendication 1, dans lequel la première couche de traduction (254) comprend un compresseur (260) configuré pour comprimer les données et le script d'une forme non comprimée en une forme comprimée, et dans lequel la deuxième couche de traduction (209) comprend un décompresseur (270) relié au récepteur (22) et configuré pour décomprimer les données et le script de la forme comprimée en la forme décomprimée.

3. Système selon la revendication 1, dans lequel la première couche de traduction (254) comprend un crypteur (262) configuré pour crypter le script et les données, et dans lequel la deuxième couche de traduction (209) comprend un décrypteur (268) configuré pour décrypter les données et le script.

4. Système selon la revendication 1, dans lequel la première couche de traduction (254) comprend un codeur (264) configuré pour coder le script et les données, et dans lequel la deuxième couche de traduction (209) comprend un décodeur (266) configuré pour décoder le script et les données.

5. Système selon la revendication 1, dans lequel la première couche de traduction (254) comprend un générateur de paquets (256) configuré pour diviser le script et les données en des parties et traduire les parties en des paquets appropriés pour l'émission, et dans lequel la deuxième couche de traduction (209) comprend un extracteur de paquets (212) configuré pour traduire en sens inverse et assembler les paquets.

6. Système selon la revendication 1, dans lequel l'émetteur (258) comprend :

   un émetteur sans fil pour émettre le contenu par l'intermédiaire d'une liaison de transmission dans fil, et dans lequel le récepteur (22) comprend un récepteur sans fil (37) configuré pour recevoir le contenu par l'intermédiaire de la liaison de transmission sans fil.

7. Système selon la revendication 1, comprenant en outre:

   un ordinateur de bureau (16) pouvant être relié sélectivement au composant fournisseur et comportant un composant d'extraction configuré pour extraire le fichier de données et le fichier de script et un composant de synchronisation (26) configuré pour être relié sélectivement au dispositif mobile (18).

8. Système selon la revendication 7, dans lequel le récepteur (22) comprend :

   un composant de synchronisation (28) sur le dispositif mobile (18) pouvant être relié sélectivement au composant de synchronisation (26) sur l'ordinateur de bureau (16), dans lequel le composant de synchronisation (26) sur l'ordinateur de bureau (16) et le composant de synchronisation (28) sur le dispositif mobile (18) sont configurés pour synchroniser sélectivement le fichier de script et le fichier de données par rapport au dispositif mobile (18).

9. Système selon la revendication 8, dans lequel la première mémoire contient un fichier de définition décrivant les caractéristiques du contenu d'informations, y compris une caractéristique de journalisation, et dans lequel le système de transport consigne des informations de rendu représentatives du rendu du contenu d'informations sur le dispositif mobile (18).

10. Système selon la revendication 9, dans lequel le composant de synchronisation (28) sur le dispositif mobile (18) est configuré pour synchroniser les informations de rendu par rapport à l'ordinateur de bureau (16), et dans lequel le composant d'extraction est configuré pour fournir les informations de rendu au composant fournisseur.

11. Système selon la revendication 10, dans lequel les informations de rendu contiennent un compte de rendus représentatif d'un nombre de fois où le contenu d'informations est soumis à un rendu sur le dispositif mobile (18) et une durée de rendu représentative d'une durée pendant laquelle le contenu d'informations est soumis à un rendu sur le dispositif mobile (18).

12. Système selon la revendication 7, dans lequel le composant fournisseur comprend en outre :

    un émetteur sans fil pour émettre le contenu par l'intermédiaire d'une liaison de transmission dans fil, et dans lequel le récepteur (22) comprend en outre un récepteur sans fil (37) configuré pour recevoir le contenu par l'intermédiaire de la liaison de transmission sans fil.

13. Système selon la revendication 1, dans lequel le contenu d'informations comprend des informations soumises à un rendu en utilisant un langage indépendant du processeur.

**14.** Système selon la revendication 13, dans lequel le contenu d'informations comprend des informations soumises à un rendu en utilisant un langage de balisage hypertexte html.

**15.** Système selon la revendication 1, dans lequel la première couche de traduction (254) est conçue pour fournir le script et les données, sous la forme traduite, avec une pluralité de segments de filtrage séparés, le récepteur (22) du dispositif mobile (18) est conçu pour recevoir et rejeter sélectivement le script et les données sur la base d'un premier de la pluralité de segments de filtrage, et la deuxième couche de traduction (209) est conçue pour recevoir et rejeter sélectivement le script et les données sur la base d'un deuxième de la pluralité de segments de filtrage.

**16.** Système selon la revendication 15, dans lequel le contenu d'informations comprend des informations de groupe et des informations de sujet sur un canal permettant un abonnement, dans lequel le deuxième de la pluralité de segments de filtrage contient une première partie de filtrage correspondant au groupe d'informations et une deuxième partie de filtrage correspondant aux informations de sujet, et dans lequel la deuxième couche de traduction est conçue pour filtrer, sur la base du groupe et du sujet, des parties de filtrage indépendamment les unes des autres.

**17.** Support lisible par ordinateur contenant des instructions lisibles par un dispositif mobile (18) qui, lorsqu'elles sont mises en oeuvre, ont pour effet que le dispositif mobile (18) traite des informations en effectuant les étapes consistant à :

recevoir par intermittence un fichier de données, un fichier de script correspondant et des informations de balisage, dans lequel le fichier de données et le fichier de script correspondant sont reçus sous forme traduite, le fichier de données contenant des données représentatives d'informations, et le fichier de script contenant des informations de script représentatives d'un aspect particulier que les informations doivent adopter lorsqu'elles sont soumises à un rendu, le fichier de données et le fichier de script correspondant pouvant être reçus indépendamment par le dispositif mobile (18) ;
convertir les données et le fichier de script en une forme non traduite sur la base des informations de balisage ;
stocker le fichier de script et le fichier de données ; et
extraire les données du fichier de données et exécuter le script contenu dans le fichier de script correspondant pour soumettre à un rendu les données.

**18.** Support lisible par ordinateur selon la revendication 17, contenant des instructions lisibles par un dispositif mobile (18) qui, lorsqu'elles sont mises en oeuvre, ont pour effet que le dispositif mobile (18) traite des informations en effectuant les étapes consistant à :

recevoir par intermittence un fichier de données mis à jour contenant des données mises à jour ; et
exécuter le script contenu dans le fichier de script correspondant, déjà stocké sur le dispositif mobile (18), pour soumettre à un rendu les données mises à jour.

**19.** Support lisible par ordinateur selon la revendication 18, dans lequel l'étape d'exécution du script dans le fichier de script correspondant, déjà sur le dispositif mobile (18), est effectuée en réponse à la réception des données mises à jour.

**20.** Support lisible par ordinateur selon la revendication 19, dans lequel l'exécution du script consiste à :

soumettre à un rendu les données sous une forme indépendante du processeur.

**21.** Support lisible par ordinateur selon la revendication 20, dans lequel l'exécution du script consiste à :

soumettre à un rendu les données sous la forme d'un langage de balisage hypertexte html.

**22.** Support lisible par ordinateur selon la revendication 17, contenant en outre des instructions lisibles par un dispositif mobile (18) qui, lorsqu'elles sont mises en oeuvre, ont pour effet que le dispositif mobile (18) traite des informations en effectuant les étapes consistant à :

recevoir par intermittence un fichier de script mis à jour contenant un script mis à jour ; et
exécuter le script mis à jour sur des données du fichier de données correspondant déjà stocké sur le dispositif mobile (18), pour soumettre à un rendu les données conformément au script mis à jour.

**23.** Support lisible par ordinateur selon la revendication 17, contenant en outre des instructions lisibles par un dispositif mobile (18) qui, lorsqu'elles sont mises en oeuvre, ont pour effet que le dispositif mobile (18) traite des informations en effectuant les étapes consistant à :

    recevoir par intermittence des fichiers de script contenant un script supplémentaire ; et
    recevoir par intermittence des données supplémentaires, correspondant aux fichiers de script supplémentaires et contenant des données supplémentaires.

**24.** Support lisible par ordinateur selon la revendication 23, contenant en outre des instructions lisibles par un dispositif mobile (18) qui, lorsqu'elles sont mises en oeuvre, ont pour effet que le dispositif mobile (18) traite des informations en effectuant les étapes consistant à :

    exécuter le script supplémentaire dans les fichiers de scripts supplémentaires sur des données contenues dans les fichiers de données supplémentaires correspondants pour soumettre à un rendu les données supplémentaires conformément au script supplémentaire.

**25.** Support lisible par ordinateur selon la revendication 17, contenant en outre des instructions lisibles par un dispositif mobile (18) qui, lorsqu'elles sont mises en oeuvre, ont pour effet que le dispositif mobile (18) traite des informations en effectuant les étapes consistant à :

    consigner des données de rendu sur la base du rendu des informations.

**26.** Support lisible par ordinateur selon la revendication 25, contenant en outre des instructions lisibles par un dispositif mobile (18) qui, lorsqu'elles sont mises en oeuvre, ont pour effet que le dispositif mobile (18) traite des informations en effectuant les étapes consistant à :

    synchroniser les données de rendu par rapport à un ordinateur personnel.

**27.** Support lisible par ordinateur selon la revendication 17, contenant en outre des instructions lisibles par un dispositif mobile (18) qui, lorsqu'elles sont mises en oeuvre, ont pour effet que le dispositif mobile (18) traite les informations en effectuant les étapes consistant à :

    recevoir le fichier de script et le fichier de données avec une pluralité de segments de filtrage séparés ; et
    recevoir et rejeter sélectivement le script et les données sur la base de la pluralité de segments de filtrage.

**28.** Support lisible par ordinateur selon la revendication 27, dans lequel le contenu d'informations comprend des informations de groupes et des informations de sujets sur un canal auquel il est possible de s'abonner, et contenant en outre des instructions lisibles par un dispositif mobile (18) qui, lorsqu'elles sont mises en oeuvre, ont pour effet que le dispositif mobile (18) traite les informations en effectuant les étapes consistant à :

    recevoir et rejeter sélectivement le script et les données sur la base d'une première partie de filtrage correspondant aux informations de groupes et d'une deuxième partie de filtrage correspondant aux informations de sujets, dans lequel le filtrage est basé sur les parties de filtrage de groupes et de sujets indépendamment les unes des autres.

**29.** Dispositif mobile (18), comprenant :

    un récepteur (22) configuré pour recevoir par intermittence un fichier de données, un fichier de script correspondant et des informations de balisage, dans lequel le fichier de données et le fichier de script correspondant sont reçus sous une forme traduite, le fichier de données contenant des données représentatives d'informations devant être soumises à un rendu et le fichier de script contenant des informations de script représentatives d'un aspect particulier que les données doivent adopter lorsqu'elles sont soumises à un rendu, le fichier de données et le fichier de script correspondant pouvant être reçus indépendamment par le dispositif mobile (18) ;
    un traducteur configuré pour traduire les données et le script correspondant de la forme traduite en une forme non traduite sur la base des informations de balisage,
    une mémoire (206) pour stocker le fichier de script et le fichier de données ; et
    un routeur (210), relié au récepteur (22) et à la mémoire (206) et configuré pour fournir le fichier de script et le fichier de données à la mémoire (206) ; et

un système de transport relié à la mémoire (206) et configuré pour extraire sélectivement le fichier de données et exécuter le script pour soumettre à un rendu les données conformément audit aspect particulier.

30. Procédé de rendu d'informations sur un dispositif mobile (18), consistant à :

recevoir par intermittence un fichier de données traduit, un fichier de script traduit correspondant, et des informations de balisage, les informations de balisage étant représentatives d'opérations de traduction utilisées pour traduire le fichier de données et le fichier de script correspondant, le fichier de données contenant des données représentatives d'informations devant être soumises à un rendu et le fichier de script contenant des informations de script représentatives d'un aspect particulier que les données doivent adopter lorsqu'elles sont soumises à un rendu, le fichier de données et le fichier de script correspondant pouvant être reçus indépendamment par le dispositif mobile (18) ;

convertir les données et le script en une forme non traduite sur la base des informations de balisage ;

stocker le fichier de script et le fichier de données ; et

extraire les données du fichier de données et exécuter le script dans le fichier de script correspondant pour soumettre à un rendu les données.

FIG. 1

EP 1 051 823 B1

FIG.2

18

45

43

46

# FIG. 3

FIG. 4

# FIG. 5

# FIG. 6

230

| RADIO TRANSPORT HEADER 232 | GROUP AND TOPIC FILTERING BYTES 234 | ROUTING HEADER 236 | DATA 238 |
|---|---|---|---|

|←——— PACKET HEADER ———→|←—— PACKET DATA ——→|

# FIG. 7

# FIG. 8

```
WEB
CONTENT 250
      |
      v
  SCHEDULER
     252
```

20    18

254    209

```
COMPRESSOR
   260
      |
      v
  ENCRYPTOR
     262
      |
      v
   ENCODER
     264
      |
      v
  PACKAGER
     256
```

```
RADIO
TRANSMITTER
    258
```

```
CACHE 208        E-MAIL 272
```

```
  ROUTING
COMPONENT
    216
```

```
DECOMPRESSOR
     270
```

```
MESSAGE
ROUTER 210
```

```
DECRYPTOR
   268
      |
   DECODER
     266
      |
  UNPACKAGER
     212
```

```
  RADIO
DRIVER AND
RECEIVER 22
```